(19) Europäisches Patentamt / European Patent Office / Office européen des brevets

(11) **EP 2 635 473 B1**

(12) **EUROPÄISCHE PATENTSCHRIFT**

(45) Veröffentlichungstag und Bekanntmachung des Hinweises auf die Patenterteilung:
**09.12.2020   Patentblatt 2020/50**

(51) Int Cl.:
**B60T 8/172** *(2006.01)*     **F16D 55/226** *(2006.01)*
**F16D 66/00** *(2006.01)*

(21) Anmeldenummer: **11770441.1**

(22) Anmeldetag: **17.10.2011**

(86) Internationale Anmeldenummer:
**PCT/EP2011/068091**

(87) Internationale Veröffentlichungsnummer:
**WO 2012/059313 (10.05.2012 Gazette 2012/19)**

(54) **BREMSHALTER, VORRICHTUNG UND VERFAHREN ZUR ERMITTLUNG EINER MASSGRÖSSE FÜR EINE WIRKENDE BREMSKRAFT ODER REIBKRAFT AN EINER SCHEIBENBREMSE**

BRAKE MOUNT, DEVICE AND METHOD FOR MEASURING A DIMENSIONAL SIZE FOR AN ACTIVE BRAKING FORCE OR FRICTIONAL FORCE ON A DISC BRAKE

SUPPORT DE FREIN, DISPOSITIF ET PROCÉDÉ DE DÉTERMINATION D'UNE GRANDEUR DE MESURE POUR UNE FORCE DE FREINAGE OU UNE FORCE DE FRICTION EN ACTION SUR UN FREIN À DISQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2010   DE 102010043320**

(43) Veröffentlichungstag der Anmeldung:
**11.09.2013   Patentblatt 2013/37**

(73) Patentinhaber: **Continental Teves AG & Co. OHG**
**60488 Frankfurt am Main (DE)**

(72) Erfinder:
• **LOHBERG, Peter**
  **61381 Friedrichsdorf (DE)**
• **HEISE, Andreas**
  **64390 Erzhausen (DE)**
• **ERLER, Wolfgang**
  **65232 Taunusstein (DE)**
• **ZYDEK, Michael**
  **60529 Frankfurt/Main (DE)**

(56) Entgegenhaltungen:
EP-A2- 0 388 040          EP-A2- 1 124 073
DE-A1-102008 042 298     DE-U1-202008 011 818
US-A1- 2004 159 512

EP 2 635 473 B1

**Beschreibung**

Die Erfindung betrifft einen Bremshalter zur Ermittlung einer Maßgröße für eine wirkende Bremskraft oder Reibkraft an einer Scheibenbremse eines Kraftfahrzeugs gemäß dem Oberbegriff des Anspruchs 1, eine Vorrichtung zur Ermittlung einer Maßgröße für eine wirkende Bremskraft oder Reibkraft an einer Scheibenbremse eines Kraftfahrzeugs sowie ein Verfahren gemäß dem Oberbegriff des Anspruchs 10.

Eine Scheibenbremse weist in bekannter Bauart eine auf der Nabe eines zu bremsenden Rades mitlaufende Bremsscheibe auf, an die von beiden Seiten Reibbeläge in Form von Bremsklötzen oder Reibbelägen gepresst werden. Diese Reibbeläge sind in einem so genannten Bremssattel angebracht. Der Bremssattel wird auch als Bremszange bezeichnet und umspannt die Bremsscheibe. Die Aktivierung der Bremse erfolgt in der Regel hydraulisch mit Hilfe mindestens eines Bremskolbens als Aktuator. In Kraftfahrzeugen werden in der Regel Teilscheibenbremsen eingesetzt, also Scheibenbremsen, die nur einen Teil der Fläche der Scheibe als Reibfläche nutzen.

Ferner finden bei Automobilen sog. Schwimmsattelbremsen bevorzugte Verwendung. Schwimmsattelbremsen haben im Gegensatz zu Festsattelbremsen die Aktuatoren nur auf einer Seite der Scheibe. Die Bauart der Schwimmsattelbremse ermöglicht, die Bremskraft an beiden Seiten der Bremszange grundsätzlich über nur einen Aktuator aufzubauen. Der längsverschieblich gelagerte bzw. schwimmend aufgehängte Bremssattel überträgt den von nur einem Aktuator aufgebrachten Druck mechanisch auf die andere Seite der Bremsscheibe. Schwimmsattelbremsen benötigen durch diesen Aufbau nur vergleichsweise geringen Bauraum, so dass eine Schwimmsattelbremse bei geringerer Bauhöhe im Vergleich mit Festsattelbremsen besser platziert werden kann. Ferner haben Schwimmsattelbremsen einen hohen Wirkungsgrad und sind in Aufbau und in Wartung vergleichsweise einfach. So können insbesondere Reib- bzw. Reibbeläge in kurzer Zeit getauscht werden.

In bekannten Scheibenbremsen dienen als Aktuator hydraulisch betätigte Kolben, die mittels Hydraulikdruck in entsprechenden Betätigungseinrichtungen verschiebbar sind. Im Fall einer elektromechanisch betätigten Scheibenbremse kommt anstelle eines Hydraulikzylinders ein elektromechanischer Aktuator zum Einsatz.

Prinzipiell fehlt bei einer Scheibenbremse mit elektromechanischem Aktuator jede Rückmeldung einer wirkenden Bremskraft an ein Bremspedal, wie sie über den hydraulischen Kreis bei herkömmlichen hydraulischen Bremsen gegeben ist. Daher ist es insbesondere bei einer Scheibenbremse mit elektromechanischem Aktuator - jedoch auch bei hydraulisch betätigten Scheibenbremsen- wünschenswert, unabhängig von ihrer genauen konstruktiven Ausführungsform, eine im Betrieb aktuell wirkende Bremskraft ständig und möglichst genau zu erfassen. Nur auf dieser Basis kann die Scheibenbremse zuverlässig und mit einer erforderlichen Genauigkeit geregelt werden, um eine durch einen Benutzer vorgegebene Bremsanforderung einhalten und auch an diesen zurückmelden zu können sowie um schlupfgeregelte Bremsungen (Antiblockierregelungen) durchführen zu können.

Aus dem Stand der Technik sind diverse Ansätze bekannt, die Zuspannkraft (Normalkraft) einer Scheibenbremse zu bestimmen, d.h. die Kraft, mit welcher die Reibbeläge in einer Richtung normal zur Bremsscheibenoberfläche gegen die Bremsscheibe gedrückt werden. Allerdings ist die Zuspannkraft nicht der Bremskraft (Umfangskraft) oder dem Bremsmoment proportional. So ist als ein Faktor der Reibungskoeffizient ($\mu_B$) zwischen dem Reibbelag und der Bremsscheibe zu berücksichtigen, welcher von Bedingungen wie Temperatur, Nässe und Schmutz abhängig ist und im Betrieb schwankt. Das Bremsmoment ist der Bremskraft proportional mit einem sog. effektiven Reibradius, welcher ebenfalls veränderlich ist und nicht genau bestimmt werden kann. Entsprechend kann für eine hydraulisch betätigte Scheibenbremse nach heutigem Stand der Erkenntnisse aufgrund der hohen Komplexität der Vorgänge der Verlauf des Bremsmomentes nicht zuverlässig aus dem Verlauf des Bremsdruckes bestimmt werden.

Ansätze zur Bestimmung der Zuspannkraft einer Scheibenbremse bauen üblicherweise auf einer elastischen Aufweitung des Bremssattels (in einer Richtung senkrecht zur Bremsscheibenoberfläche (axiale Richtung)) auf. So ist es bekannt, die Aufweitung des Bremssattels mit einem Dehnmessstreifen zu messen, der in einem Jochbereich des Bremssattels aufgeklebt ist, mit dem der Bremssattel die Bremsscheibe übergreift. Auch in der DE 10 2006 029 978 B3 werden ein Verfahren und eine Vorrichtung zur Messung einer wirkenden Normalkraft an einer Scheibenbremse beschrieben. Hierzu ist an dem Bremssattel der Scheibenbremse eine Einrichtung vorgesehen, welche die Normalkraft anhand einer elastischen Aufweitung des Bremssattels bei einem Zuspannen der Bremse misst, indem eine Scherbewegung eines Teils der Scheibenbremse beim Aufweiten des Bremssattels vermessen wird.

Aus der gattungsgemäßen DE 10 2005 013 142 A1 ist eine Bremskraftmessvorrichtung für eine Reibungsbremse mit Rahmensattel bekannt, welche eine Bewegung des Bremssattels beim Bremsen durch eine Wegmesseinrichtung mit zwei gegeneinander beweglichen Teilen misst. Hierbei ist immer eines der Teile der Wegmesseinrichtung an dem beweglichen Bremssattel angeordnet.

Weitere Bremskraftmessvorrichtungen sind aus den EP 0 388 040 A2, DE 10 2008 042 298 A1 und US 2004/0159512 A1 bekannt.

Die Aufgabe der Erfindung besteht darin, einen Bremshalter, eine Vorrichtung und ein Verfahren bereitzustellen, mittels welcher/welchem während eines Bremsvorganges ein Maß für die wirkende Bremskraft (Umfangskraft) oder das wirkende Bremsmoment an einer Scheibenbremse kontinuierlich, mit preiswerten Mitteln und in ausreichender Genauigkeit erfasst werden kann.

Diese Aufgabe wird erfindungsgemäß durch den Bremshalter nach Anspruch 1, die Vorrichtung nach Anspruch 8 und das Verfahren nach Anspruch 10 gelöst.

Der Erfindung liegt der Gedanke zugrunde, eine durch die Bremskraftwirkung hervorgerufene Verformung bzw. Verschiebung einer Belagsführungsschiene des Bremshalters in Richtung senkrecht zu der axialen Richtung der Bremsscheibe zu messen, wozu die Relativbewegung zweier Sensorelemente einer Sensorvorrichtung, die beide an dem Bremshalter angeordnet sind, gemessen wird. Die gemessene Relativbewegung kann dann als Maßgröße für die wirkende Bremskraft oder das wirkende Bremsmoment oder den aktuellen Reibwert oder einen Neigungswinkel des Fahrzeugs herangezogen werden.

Dass jedes der beiden Sensorelemente an dem Bremshalter angeordnet ist, bedeutet dabei, dass jedes Sensorelement über ein Verbindungsmittel starr mit dem Bremshalter verbunden bzw. starr an dem Bremshalter angebracht ist. Dabei kann die Anbringung oder Verbindung lösbar oder unlösbar ausgeführt sein.

Die Erfindung bietet dadurch, dass die Sensorvorrichtung vollständig am Bremshalter angeordnet ist, den Vorteil, dass die Sensorvorrichtung einfacher und damit kostengünstiger montiert werden kann. So ist z.B. auch eine Anordnung der beiden Sensorelemente in einer vorfertigbaren Untereinheit (z.B. einer Kartusche) möglich, welche dann nur noch an dem Bremshalter befestigt werden braucht. Eine Ausrichtung oder Justage der beiden Sensorelemente beim Zusammenbau der Scheibenbremse, welche notwendig wird, wenn eines der Sensorelemente an dem Bremshalter und das andere Sensorelemente an dem Bremssattelgehäuse angebracht ist, ist somit nicht notwendig.

Bevorzugt ist eines der beiden Sensorelemente derart an dem Bremshalter angeordnet, dass das Sensorelement durch eine Bremskraftwirkung im Wesentlichen keine Verschiebung oder Bewegung in Richtung senkrecht zur axialen Richtung der Bremsscheibe erfährt. Hierzu ist das Sensorelement vorteilhafterweise an einem fahrzeugseitigen Teil des Bremshalters angeordnet. Gleichzeitig ist das andere der beiden Sensorelemente an dem Teil des Bremshalters angeordnet, welcher sich durch die Bremskraftwirkung in Richtung senkrecht zur axialen Richtung der Bremsscheibe verschiebt oder verformt, dass das Sensorelement durch die Bremskraftwirkung eine Verschiebung oder Bewegung in Richtung senkrecht zur axialen Richtung der Bremsscheibe erfährt. Hierzu ist dieses Sensorelement vorteilhafterweise an einem fahrzeugabgewandten Teil des Bremshalters angeordnet.

Es wird eine Verschiebung einer Belagsführungsschiene des Bremshalters in Richtung senkrecht zur axialen Richtung der Bremsscheibe gemessen. Da die Belagführungsschiene einseitig fest über den Bremshalter mit dem Fahrzeug verbunden ist, d.h. ortsfest ist, und die Bremsscheibe übergreift, unterliegt die Belagsführungsschiene im Bereich ihres äußeren (fahrzeugabgewandten) Endes einer verhältnismäßig großen Verschiebung, welche mittels der Sensorvorrichtung erfasst werden kann, indem die beiden Sensorelemente an den beiden genannten Bereichen der Belagführungsschiene angeordnet werden. Die Belagsführungsschiene kann so einfach als Teil des Messprinzips genutzt werden.

Bevorzugt umfasst die Sensorvorrichtung einen steifen Sensorkörper, welcher einseitig mit einem Teil des Bremshalters starr verbunden ist und an welchem eines der beiden Sensorelemente angebracht ist. Der Sensorkörper entspricht dann einem oben erwähnten Verbindungsmittel. Der steife Sensorkörper kann so, ähnlich einem Messzeiger, eine Position oder eine Bewegung/Verformung des Teils des Bremshalters an einen anderen Ort des Bremshalters, in dessen Umgebung sich das anderen Sensorelement befindet, projizieren. Der Teil des Bremshalters, an welchem die Sensorvorrichtung einseitig eingespannt ist, ist besonders bevorzugt eine Belagführungsschiene. Um eine ausreichende Messauflösung zu erhalten, ist das Sensorelement vorteilhafterweise in einem Bereich des freien Endes des Sensorkörpers angebracht.

Aus dem Grund einer ausreichenden Messauflösung ist es bevorzugt, dass der Sensorkörper sich entlang einer Belagführungsschiene über die Bremsscheibe erstreckt, um so eine möglichst großer Verschiebung/Verformung der Belagführungsschiene zu erfassen.

Bevorzugt wird eine Verschiebung eines Teils des Bremshalters in Richtung der tangential wirkenden Reibkraft gemessen.

Um die Sensorvorrichtung vor äußeren Einflüssen oder Störfeldern zu schützen, ist die Sensorvorrichtung bevorzugt zumindest teilweise in einer Innenbohrung einer Belagführungsschiene angeordnet. Besonders bevorzugt ist der Sensorkörper zumindest teilweise in der Innenbohrung angeordnet. Ebenso ist es besonders bevorzugt, dass das erste und das zweite Sensorelement in einer Innenbohrung einer Belagführungsschiene angeordnet sind. Alternativ sind das erste und das zweite Sensorelement besonders bevorzugt in einer an dem fahrzeugabgewandten Ende einer Belagführungsschiene angebrachten Schutzkappe angeordnet.

Gemäß einer vorteilhaften Weiterbildung des erfindungsgemäßen Bremshalters ist der Sensorkörper mit einem seiner Enden im Bereich der fahrzeugseitigen Befestigung des Bremshalters an dem Bremshalter befestigt, an dem anderen Ende des Sensorkörpers ist das erste Sensorelement angeordnet und das zweite Sensorelement ist in einem Bereich des fahrzeugabgewandten Endes einer Belagführungsschiene angeordnet.

Gemäß einer anderen vorteilhaften Weiterbildung des erfindungsgemäßen Bremshalters ist der Sensorkörper mit einem seiner Enden an dem fahrzeugabgewandten Ende einer Belagführungsschiene befestigt, an dem anderen Ende des Sensorkörpers ist das zweite Sensorelement angeordnet und das erste Sensorelement ist im Bereich der fahrzeugseitigen Befestigung des Bremshalters an dem Bremshalter angeordnet.

Das erste und das zweite Sensorelement der Sensorvorrichtung arbeiten bevorzugt nach einem magnetischen Messprinzip zusammen. Magnetische Messprinzipien sind vorteilhaft, da sie berührungslos funktionieren und so auch in harschen Umgebungsbedingungen eingesetzt werden können.

Gemäß einer Weiterbildung der Erfindung sind die beiden Sensorelemente der Sensorvorrichtung als ein aktives (Meßwertnehmer) und ein passives (Messwertgeber) Sensorelement ausgeführt. Um die elektrische Verbindung des aktiven Sensorelements mit einer Steuer- oder Auswerteeinheit möglichst einfach und ausfallsicher zu realisieren, ist bevorzugt das aktive Sensorelement an einem fahrzeugseitigen Teil des Bremshalters, d.h. im wesentlichen ortsfest, angeordnet.

Gemäß einer bevorzugten Ausführungsform der Erfindung trägt eine der Belagführungsschienen ein permanentmagnetisches oder ferromagnetisches Mittel, welches als zweites Sensorelement der Sensorvorrichtung angesehen werden kann. Eine Verschiebung des magnetischen Mittels wird von zumindest einem in oder an dem Sensorkörper der Sensorvorrichtung angeordneten magnetisch empfindlichen Element (erstes Sensorelement) erfasst. Besonders bevorzugt handelt es sich bei dem Mittel um einen Permanentmagnet oder eine permanentmagnetische Multipolstruktur, welche(r) einen Messwertgeber der Sensorvorrichtung darstellt. Gemäß einer anderen besonders bevorzugten Alternative handelt es sich bei dem Mittel um eine periodische ferromagnetische Struktur, z.B. in Form einer Zahnstruktur, welche gemeinsam mit einem Permanentmagnet einen Messwertgeber der Sensorvorrichtung darstellt. Der Permanentmagnet ist dabei vorteilhafterweise in dem Sensorkörper der Sensorvorrichtung angeordnet.

Die Erfindung betrifft auch eine Vorrichtung mit einem erfindungsgemäßen Bremshalter.

Gemäß einer Weiterbildung der Erfindung wird eine Bremsregelung der Scheibenbremse direkt anhand der gemessenen Verschiebung durchgeführt. Somit ist keine Umrechnung der gemessenen Verschiebung in eine Bremskraft oder ein Bremsmoment notwendig. Alternativ wird eine Bremsregelung der Scheibenbremse anhand einer aus der gemessenen Verschiebung berechneten Bremsenstellgröße durchgeführt. Unter einer Bremsstellgröße der Scheibenbremse wird eine Größe verstanden, welche ein Maß für die Betätigung der Scheibenbremse darstellt. Als Bremsenstellgröße kann z.B. ein Bremspedalbetätigungswinkel oder -weg, oder ein Bremsdruck im Falle einer hydraulisch betätigbaren Scheibenbremse, oder ein Motorstrom im Falle einer elektromechanisch betätigbaren Scheibenbremse herangezogen werden.

Die Sensorvorrichtung ist bevorzugt mit einer Regeleinheit verbunden, welche eine Bremsregelung anhand des Messsignals der Sensorvorrichtung durchführt. Besonders bevorzugt umfasst die Regeleinheit eine Verarbeitungslogik zur Ermittlung einer Bremsenstellgröße oder einer wirkenden Bremskraft oder eines wirkenden Bremsmoments anhand des Messsignals der Sensorvorrichtung.

Bevorzugt ist eine Sensorvorrichtung an der Scheibenbremse angeordnet, mittels welcher eine Verschiebung des Teils des Bremshalters in Richtung senkrecht zur axialen Richtung der Bremsscheibe relativ zu zumindest einem Teil der Sensorvorrichtung gemessen wird. Besonders bevorzugt ist dieser Teil der Sensorvorrichtung mit nur einem seiner Enden an dem Bremshalter befestigt.

Der Bremshalter umfasst bevorzugt zumindest zwei die Bremsscheibe übergreifende Belagführungsschienen, auf welchen zumindest einer der beiden Reibbeläge angeordnet auf einem Reibbelagträger gehalten ist. Mittels der Sensorvorrichtung wird eine Verschiebung einer der Belagführungsschienen in Richtung senkrecht zur axialen Richtung der Bremsscheibe erfasst. Um eine möglichst große Verformung bzw. Verschiebung messen zu können, vermisst die Sensorvorrichtung besonders bevorzugt eine Verschiebung am oder im Bereich des (fahrzeug)äußeren Reibbelagträgers.

Gemäß einer bevorzugten Ausführungsform der Vorrichtung ist der Bremshalter derart ausgeführt, dass er bei einem Zuspannen oder Lösen der Scheibenbremse eine Kennlinie zwischen einer Bremsenstellgröße und der Verschiebung aufweist, welche bei zumindest einem charakteristischen Wert der Verschiebung eine erkennbare Änderung ihres Verlaufs aufweist. Dieser charakteristische Wert bzw. die Änderung des Verlaufs der Kennlinie kann zur Überprüfung des aktuellen Zustandes der Scheibenbremse bzw. zur Korrektur der gemessenen Verschiebungen herangezogen werden. Vorteilhafterweise ermöglicht/ermöglichen die charakteristische(n) Stelle(n) der Änderung des Kennlinienverlaufs, welche unabhängig vom Verschleiß der Bremse ist/sind oder sich in bekannterweise ändert/ändern, eine Anpassung der gemessenen Verschiebungen an den Reibbelagverschleiß der Bremse. Anhand der charakteristischen Stelle(n) wird bevorzugt ein Lernverfahren für die aktuelle Kennlinie zur Berücksichtigung des Reibbelagverschleißes durchgeführt. Die Kennlinie zwischen Bremsenstellgröße und Verschiebung wird bevorzugt durch die Ausführung der Belagführungsschienen und der Halterung des Reibbelagträgers an den Belagführungsschienen beeinflusst bzw. festgelegt. Besonders bevorzugt sind die Belagführungsschienen und die Halterung der Reibbeläge an den Belagführungsschienen (Reibbelagträger, Hammerkopfhalter) derart ausgeführt, dass die Kennlinie einen charakteristischen Wert aufweist, an welchem eine erkennbare Änderung des Verlaufs der Kennlinie auftritt. Die erkennbare Änderung des Verlaus ist vorteilhafterweise eine schlagartige Änderung der Steigung der Kennlinie.

Bevorzugt handelt es sich bei der Scheibenbremse um eine hydraulisch betätigbare Scheibenbremse. Die Kennlinie wird dann durch Messung des Radbremsdruckes (Bremsenstellgröße) und der zugehörigen Verschiebung bestimmt. Dies ist vorteilhaft, da der Radbremsdruck einfach durch einen Drucksensor gemessen werden kann, welcher üblicherweise in Bremsanlage bereits vorhanden ist.

Es ist aber auch bevorzugt, dass es sich bei der Scheibenbremse um eine elektromechanisch betätigbare Scheibenbremse handelt. Als Bremsenstellgröße wird dann besonders bevorzugt ein Motorstrom oder eine Spindelstellung des elektromechanischen Aktuators der Scheibenbremse herangezogen.

Gemäß einer vorteilhaften Weiterbildung der erfindungsgemäßen Vorrichtung ist einer der Reibbeläge durch eine Betätigungseinheit direkt und der andere Reibbelag durch die Wirkung einer vom Bremssattelgehäuse aufgebrachten Reaktionskraft mit der Bremsscheibe in Eingriff bringbar.

Die Erfindung betrifft auch ein Verfahren gemäß dem Anspruch 10.

Bevorzugt wird anhand der gemessenen Verschiebung oder einer aus der gemessenen Verschiebung ermittelten Bremsenstellgröße eine elektronische Regelung der Scheibenbremse durchgeführt.

Die gemessene Verschiebung bzw. die daraus ermittelte Bremsenstellgröße stellt für Bremsungen, d.h. wenn das Kraftfahrzeug verzögert wird, ein Maß für die wirkende Bremskraft dar, solange kein Rutschen oder Gleiten des der Scheibenbremse zugeordneten Rades auftritt.

Bei einer Betätigung der Scheibenbremse im Stillstand des Kraftfahrzeugs (Halten des Kraftfahrzeugs auf einer Fahrbahn) wird bevorzugt aus der ermittelten Verschiebung eine Hangabtriebskraft oder ein Neigungswinkel des Kraftfahrzeugs ermittelt, da die Verschiebung unter diesen Bedingungen ein Maß für die auf das Kraftfahrzeug wirkende Hangabtriebskraft darstellt.

Rutscht oder gleitet das Rad, was z.B. anhand des Radschlupfes des Rades erkannt werden kann, so wird bevorzugt aus der ermittelten Verschiebung auf den aktuell vorliegenden Reibwert zwischen Fahrbahn und Rad geschlossen.

Gemäß einer bevorzugten Weiterbildung des erfindungsgemäßen Verfahrens ist eine Kennlinie des Bremshalters vorgegeben und/oder wird eine aktuelle Kennlinie des Bremshalters während des Betriebs der Scheibenbremse ermittelt bzw. überprüft, wobei die Kennlinie einen Zusammenhang zwischen einer Bremsenstellgröße und der Verschiebung bei einem Zuspannen oder Lösen der Scheibenbremse darstellt. Besonders bevorzugt wird eine Auswertung der Kennlinie zur Erkennung zumindest eines charakteristischen Wertes der Kennlinie durchgeführt, bei welchem eine erkennbare Änderung des Verlaufs der Kennlinie auftritt. Vorteilhafterweise ist die Änderung des Verlaufs eine sprunghafte Änderung der Steigung der Kennlinie bei einem charakteristischen Wert der Verschiebung. Dieser charakteristische Punkt der Kennlinie wird vorteilhafterweise im Falle einer Veränderung der Kennlinie, z.B. der Veränderung der Steigung der Kennlinie, im Laufe der Zeit durch Reibbelagverschleiß als Referenzpunkt genutzt.

Im Falle einer hydraulisch betätigbaren Scheibenbremse wird die Kennlinie vorteilhafterweise durch Messung oder Vorgabe eines Radbremsdrucks und Messung der zugehörigen Verschiebung ermittelt bzw. überprüft. Für eine elektromechanisch betätigbaren Scheibenbremse wird vorteilhafterweise ein Motorstrom oder eine Spindelstellung des elektromechanischen Aktuators der Scheibenbremse und die zugehörige Verschiebung zur Bestimmung bzw. Überprüfung der Kennlinie gemessen.

Der Verlauf der Kennlinie zwischen Bremsenstellgröße und Verschiebung wird bevorzugt durch die konstruktive Ausführung der Belagführungsschienen und der Halterung der Reibbeläge an den Belagführungsschienen bestimmt.

Anhand der ermittelten aktuellen Kennlinie wird bevorzugt eine Korrektur einer gemessenen Verschiebung bezüglich eines Reibbelagsverschleiß durchgeführt. Die korrigierte Verschiebung wird dann besonders bevorzugt zur Bremsregelung der Scheibenbremse verwendet.

Die aktuelle Kennlinie des Bremshalters wird bevorzugt unter zu Hilfenahme des charakteristischen Werts der Verschiebung bestimmt oder zur Korrektur der gemessenen Verschiebung ausgewertet.

Der charakteristische Wert der Kennlinie stellt bevorzugt eine Stelle der Kennlinie dar, bei welchem sich die Steigung der Kennlinie sprunghaft ändert. Der charakteristische Wert kann so durch Auswertung einfach aufgefunden werden.

Bevorzugt wird anhand der vorgegebenen oder ermittelten Kennlinie des Bremshalters aus einer gemessenen Verschiebung eine Bremsenstellgröße bestimmt. Anhand der ermittelten Bremsenstellgröße wird dann vorteilhafterweise eine elektronische Bremsregelung der Scheibenbremse durchgeführt.

Bei einer elektronischen Bremsregelung der Scheibenbremsen der Räder einer Fahrzeugachse des Kraftfahrzeugs wird bevorzugt für jede Scheibenbremse der Fahrzeugachse eine durch eine Bremskraftwirkung hervorgerufene Verschiebung zumindest eines Teils des Bremshalters in Richtung senkrecht zu der axialen Richtung der Bremsscheibe gemessen, und die gemessenen Verschiebungen der Scheibenbremsen werden dann zur Bremsregelung herangezogen. Für die Bremsregelung der Scheibenbremsen einer Fahrzeugachse können die Verschiebungen direkt herangezogen werden; es ist nicht notwendig, aus den Verschiebungen Bremsenstellgrößen zu bestimmen, da für die Regelung im Wesentlichen die relativen Umfangskräfte (d.h. das Größenverhältnis der Umfangskräfte der beiden Bremsen) relevant sind, welche für die einzelnen Scheibenbremsen im Wesentlichen gleichartig und zeitgleich bestimmt wurden.

Besonders bevorzugt werden bei der Bremsregelung zusätzlich Bremsenstellgrößen und/oder Raddrehzahlen und/oder Achsbeschleunigungen der entsprechenden Räder berücksichtigt, um eventuelle Unterschiede zwischen den Rädern anhand von Kausalitätsberechnungen erkennen und ggf. zumindest teilweise korrigieren zu können.

Weitere bevorzugte Ausführungsformen ergeben sich aus den Unteransprüchen und der nachfolgenden Beschreibung an Hand von Figuren.

Es zeigen schematisch

Fig. 1     eine an sich bekannte Schwimmsattel-Scheibenbremse mit Blick von oben auf die Sattelbrücke des Bremssattelgehäuses,

Fig. 2     einen Bremshalter einer Schwimmsattel-Scheibenbremse in einem unbetätigten Zustand,

Fig. 3     einen Bremshalter einer Schwimmsattel-Scheibenbremse in einem betätigten Zustand,

Fig. 4     ein erstes Ausführungsbeispiel einer erfindungsgemäßen Vorrichtung,

Fig. 5     einen Ausschnitt eines zweiten Ausführungsbeispiels einer erfindungsgemäßen Vorrichtung,

Fig. 6     einen Ausschnitt eines dritten Ausführungsbeispiels einer erfindungsgemäßen Vorrichtung,

Fig. 7     ein Messprinzip einer beispielhaften Sensorvorrichtung eines erfindungsgemäßen Bremshalters,

Fig. 8     ein Messprinzip einer weiteren beispielhaften Sensorvorrichtung eines erfindungsgemäßen Bremshalters,

Fig. 9     einen Ausschnitt eines vierten Ausführungsbeispiels einer erfindungsgemäßen Vorrichtung,

Fig. 10    einen Ausschnitt eines fünften Ausführungsbeispiels einer erfindungsgemäßen Vorrichtung,

Fig. 11    Ausschnitte von drei weiteren Ausführungsbeispielen einer erfindungsgemäßen Vorrichtung,

Fig. 12    Anordnung eines beispielsgemäßen Bremshalters am Fahrzeugchassis,

Fig. 13    ein weiteres Ausführungsbeispiel einer erfindungsgemäßen Vorrichtung,

Fig. 14    das Ausführungsbeispiel aus Fig. 13 mit Blick auf die Faust der Scheibenbremse,

Fig. 15    beispielhafte Kennlinien einer erfindungsgemäßen Vorrichtung, und

Fig. 16    eine schematische Darstellung eines Ausführungsbeispiels eines erfindungsgemäßen Verfahrens.

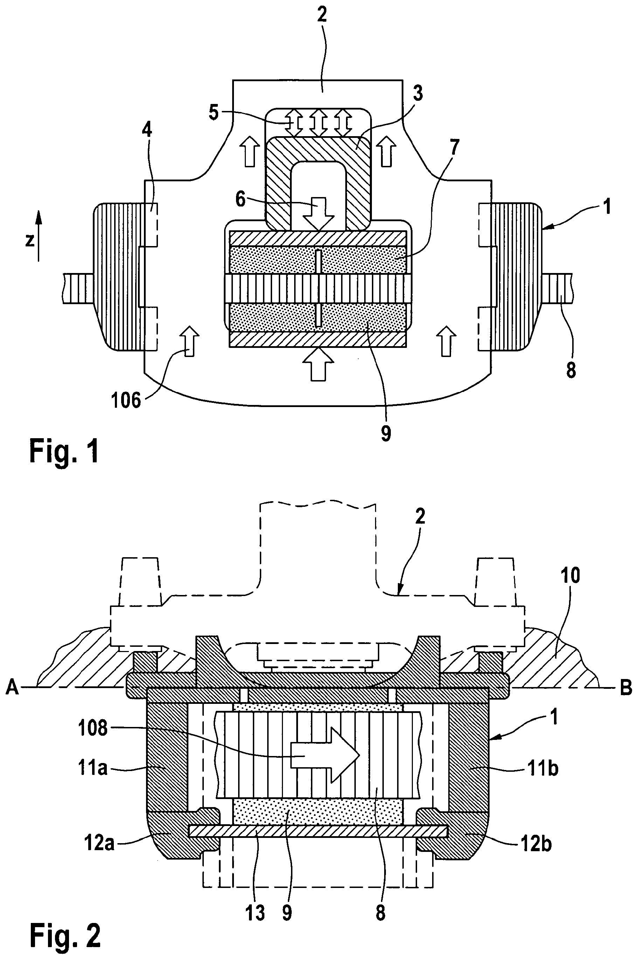

In Fig. 1 ist schematisch eine an sich bekannte Schwimmsattel-Scheibenbremse mit Blick von oben auf die Sattelbrücke des Bremssattelgehäuses dargestellt. Die Schwimmsattel-Scheibenbremse umfasst im Wesentlichen zwei Bestandteile, einen Bremshalter 1 und ein Bremssattelgehäuse 2, in welchem beispielsgemäß ein Bremskolben 3 mit Dichtring als Bestandteil einer Betätigungseinheit zur direkten Betätigung eines (inneren) Reibbelags 7 aufgenommen ist. Bremssattelgehäuse 2 ist im Bereich 4, z.B. über geeignete Führungsbolzen, auf an sich bekannte Weise axial gleitbeweglich an dem, z.B. am Radträger des Kraftfahrzeugs befestigbaren, Bremshalter 1 gelagert. Bremssattelgehäuse 2 übergreift mit seinem Sattelrücken eine Bremsscheibe 8, wobei das Bremssattelgehäuse 2 zwei beiderseits der Bremsscheibe 8 angeordnete Reibbeläge 7, 9 übergreift. Wie bereits erwähnt, ist in dem Bremssattelgehäuse 2 auf der inneren Bremsscheibenseite eine Betätigungseinheit integriert, um auf den Reibbelag 7 eine Bremszuspannkraft aufbringen zu können. Dabei umfasst die Betätigungseinheit vorzugsweise einen Bremskolben 3, der hydraulisch, elektrisch oder elektromechanisch betätigbar ist. Bei Betätigung der Bremse, z.B. im Falle einer hydraulisch betätigbaren Scheibenbremse durch Erzeugen eines hydraulischen Bremsdruckes 5, wirkt zunächst eine Kolbenkraft 6 auf den inneren Reibbelag 7 und presst diesen, nach Überwindung eines Lüftspiels, gegen die Bremsscheibe 8. Der dem inneren Reibbelag 7 gegenüberliegende, an einer Faust des Bremssattelgehäuses 2 angeordnete (äußere) Reibbelag 9 wird als Reaktion auf eine Betätigung des inneren Reibbelags 7 durch axiale Verschiebung des Bremssattelgehäuses 2 in Richtung 106 (in z-Richtung) bekanntermaßen gleichfalls gegen die Bremsscheibe 8 gedrückt. Auf beiden Seiten der Bremsscheibe 8 wirkt die gleiche Anpresskraft / Zuspannkraft. Nach dem Lösen der Bremse wird das Lüftspiel zwischen den Reibbelägen 7, 9 und der Bremsscheibe 8 durch eine Rückstellkraft des Dichtrings wieder hergestellt. Bei Reibbelagsverschleiß schiebt sich der Bremskolben 3 dem Maß der Abnutzung entsprechend durch den Dichtring weiter, wobei das Lüftspiel jeweils selbsttätig wieder eingestellt wird.

In Fig. 2 ist eine an sich bekannte Schwimmsattel-Scheibenbremse in einem unbetätigten Zustand mit Blick von unten auf den Bremshalter schematisch dargestellt. Dabei sind Bauteile des Bremshalters 1 eng schraffiert dargestellt, das dahinter befindliche Bremssattelgehäuse 2 ist gestrichelt angedeutet. Bremshalter 1, der zwei Belagführungsschienen 11a, 11b umfasst, ist in der Ebene A-B fest mit dem Radträger bzw. dem Chassis des Fahrzeugs 10 verbunden, z.B. durch Verschraubung. Der äußere (faustseitig angeordnete) Reibbelag 9 ist auf einem Reibbelagträger 13 angebracht und wird beispielsgemäß in Hammerkopfhaltern 12a, 12b der Belagführungsschienen 11a, 11b geführt. Bremsscheibe 8 rotiert in die durch den Pfeil 108 angedeutete Richtung (x-Richtung, senkrecht zur axialen z-Richtung). Zwischen Bremssattelgehäuse 2 und Radträger bzw. Chassis des Fahrzeugs 10 werden keine Kräfte übertragen. Die beiden Belagführungsschienen 11a, 11b des Bremshalters 1 sind parallel und axial (in z-Richtung) ausgerichtet.

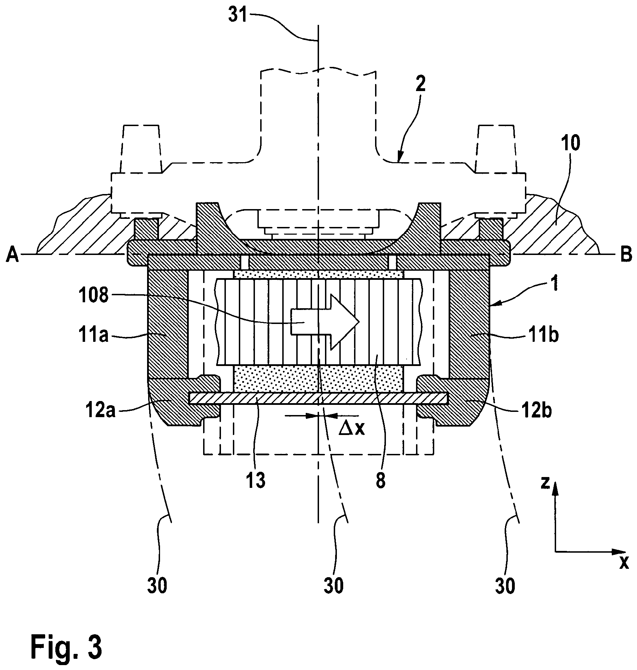

Fig. 3 zeigt die Schwimmsattel-Scheibenbremse aus Fig. 2 in einem betätigten Zustand, d.h. bei einer Bremsung, z.B. bei maximal möglichem Bremsdruck vor einem Einsetzen eines Blockierens. Eine bei der Bremsung erzeugte Reibkraft am äußeren Reibbelag 9 ist tangential in Pfeilrichtung 108 wirksam. Hierdurch werden die Belagführungsschienen 11a, 11b des Bremshalters 1 im Bereich des Reibbelagträgers 13 "mitgenommen" und es kommt zu einer Verformung / Scherung des Bremshalters 1 in Richtung senkrecht zur Achse 31 (d.h. in x-Richtung). Die Verformung / Scherung des Bremshalters 1 ist durch die gebogenen Linien 30 angedeutet. Die Achse 31 entspricht der axialen Richtung der Scheibenbremse (z-Richtung, Richtung der Zuspannkraft).

Beispielgemäß wird mittels einer Sensorvorrichtung eine Scherung / Auslenkung eines oder mehrer Elemente des Bremshalters 1 in x-Richtung gemessen und aus der gemessenen Scherung / Auslenkung eine wirkende Bremskraft oder ein wirkendes Bremsmoments ermittelt. Z.B. wird das Messsignal der Sensorvorrichtung an eine Verarbeitungslogik, z.B. in einem Steuergerät der Bremsanlage, weitergeleitet und in der Verarbeitungslogik wird aus dem Messsignal eine Bremskraft oder ein Bremsmoment berechnet.

Ein Maß für die wirkende Bremskraft $F_B$ bzw. das wirkende Bremsmoment $M_B$ wird anhand der durch die Reibkraft hervorgerufenen Verformung des Bremshalters 1 bzw. von Teilen 11a, 11b des Bremshalters 1 in einer Richtung tangential zur Bremsscheibenoberfläche (d.h. senkrecht zur bekannterweise zur Bestimmung der Zuspannkraft ausgewerteten Aufweitung des Bremssattels, welche in der Richtung senkrecht zur Bremsscheibenoberfläche (axial) auftritt) ermittelt. Dies bietet den Vorteil einer einfachen Messung der tangentialen Kraftkomponente an im Wesentlichen dem äußeren Reibbelagträger, ohne dass zusätzliche mechanische Rahmenkonstruktionen oder ähnliches notwendig sind.

Bei der in Fig. 3 dargestellten Schwimmsattel-Scheibenbremse wird beispielsgemäß die Scherung / Auslenkung der mechanischen Kette von Belagführungsschiene 11a / Reibbelagträger 13 / Belagführungsschiene 11b als Messfeder herangezogen. Im Bereich des Reibbelagträgers 13 bzw. der Hammerkopfhalter 12a, 12b werden die Belagführungsschienen 11a, 11b bei einer Bremsung um einen Betrag $\Delta x$, welcher von dem wirkenden Bremsmoment abhängig ist, gegenüber ihrer Ausrichtung im ungebremsten Zustand (parallel zu Achse 31) verformt / ausgelenkt.

In der Praxis folgt das Bremssattelgehäuse 2 dem Verschiebeweg der Belagführungsschienen. Dies ist in Fig. 3 nicht dargestellt. Die Verformung / Scherung des Bremshalters 1 ist in Fig. 3 schematisch übertrieben dargestellt.

Ein Verschiebeweg $\Delta x$ des Bremshalters 1 wird erfindungsgemäß durch eine geeignete Sensorvorrichtung gemessen. Hierzu können verschiedene Messverfahren herangezogen werden, in Betracht kommen z.B. magnetische, kapazitive oder optische Messverfahren.

Vorteilhafte Ausführungsbeispiele werden im Folgenden erläutert.

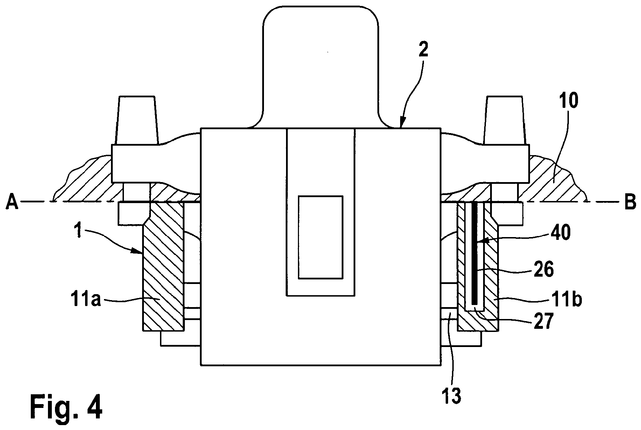

In Fig. 4 ist schematisch ein erstes Ausführungsbeispiel einer erfindungsgemäßen Vorrichtung umfassend einen Bremshalter 1 mit Sensorvorrichtung 40 und ein Bremssattelgehäuse 2 dargestellt. Bremshalter 1, der zwei Belagführungsschienen 11a, 11b umfasst, ist in der Ebene A-B fest mit dem Radträger bzw. dem Chassis des Fahrzeugs 10 verbunden, z.B. durch Verschraubung. Zumindest eine der Belagführungsschienen, beispielsgemäß die Belagführungsschiene 11b, ist mit einer, im Wesentlichen von der Ebene A-B ausgehenden Innenbohrung 27 versehen, in deren Hohlraum eine Sensorvorrichtung 40 mit ein oder mehreren geeigneten magnetisch, kapazitiv oder optisch empfindlichen sensorischen Elementen (nicht dargestellt) an einem starren Sensorhaltekörper 26 eingebracht ist. Vorteilhafterweise ist/sind das/die magnetisch, kapazitiv oder optisch empfindliche(n) sensorische(n) Element(e) bis nahe zum Ende der Belagführungsschiene 11b eingeführt, um eine möglichst große Querverschiebung $\Delta x$ zu erfassen. Bei einer Bremsung bleibt Sensorhaltekörper 26 ortsunveränderlich, z.B. orthogonal, relativ zur Befestigungsebene A-B ausgerichtet (keine Verformung), wohingegen die Belagführungsschiene 11b relativ zum Haltekörper 26 verformt wird. Die Änderung eines Abstandes zwischen Haltekörper 26 und Belagführungsschiene 11b bzw. einer relativen Verschiebung zwischen Haltekörper 26 und Belagführungsschiene 11b wird mittels der magnetisch, kapazitiv oder optisch empfindlichen sensorischen Elemente ermittelt. Z.B. kann die Belagführungsschiene 11b selbst als Messwertgeber für die Sensorvorrichtung dient. Gemäß einem Ausführungsbeispiel ist eine, z.B. magnetische, Maßverkörperung in der Innenbohrung 27, z.B. auf der endseitigen Stirnfläche der Innenbohrung 27, angeordnet.

Ein Vorteil des ersten Ausführungsbeispiels besteht in der möglichen Reinraumumgebung für die Sensorvorrichtung 40 bei gleichzeitigem mechanischen Schutz der Sensorvorrichtung 40. Hierdurch wird insbesondere eine Sensorvorrichtung basierend auf einem optischen Messprinzip ermöglicht.

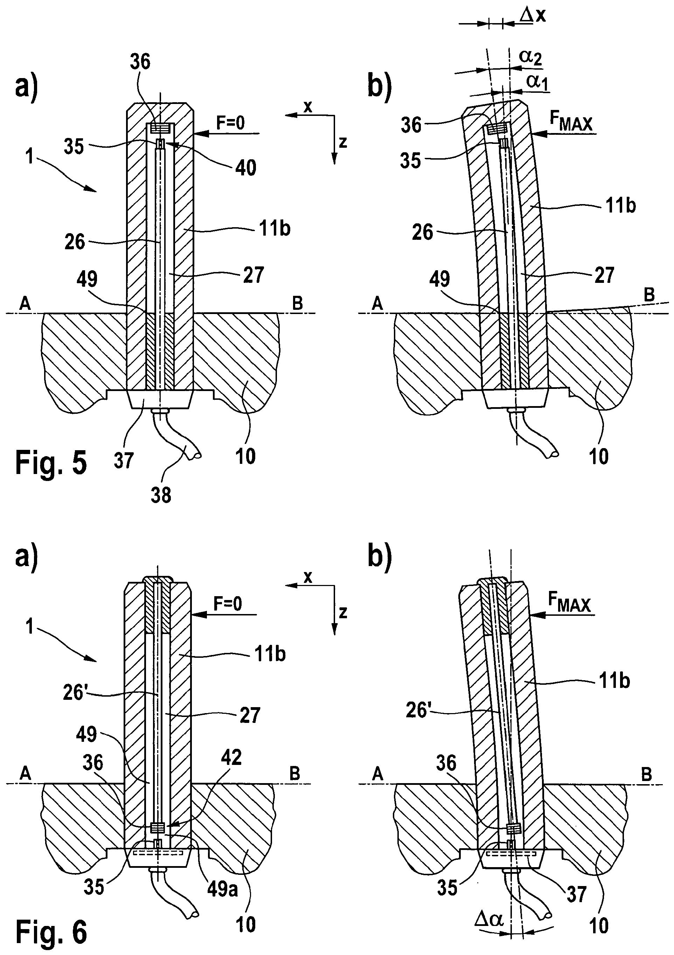

Fig. 5 zeigt einen Ausschnitt eines zweiten Ausführungsbeispiels einer erfindungsgemäßen Vorrichtung. Schematisch dargestellt ist Belagführungsschiene 11b des Bremshalters 1, welche in der Ebene A-B, z.B. über ein nicht dargestelltes Befestigungselement, mechanisch fest mit dem Chassis des Fahrzeugs 10 verbunden ist. Belagführungsschiene 11b ist mit einer Bohrung 27 versehen, in welcher die Sensorvorrichtung 40 angeordnet ist. Sensorvorrichtung 40 umfasst ein erstes Sensorelement 35, ein zweites Sensorelement 36 und einen Sensorkörper 26, welcher als starrer, nadel- oder rohrförmiger Stab ausgebildet ist. Sensorkörper 26 ist unterhalb der Ebene A-B mit der Belagführungsschiene 11b mechanisch fest verbunden und ragt in die Bohrung 27. An dem dem Fahrzeug abgewandten Ende des Sensorkörpers 26 ist das erste Sensorelement 35 angebracht und an der Belagführungsschiene 11b ist in dem dem Fahrzeugchassis 10 abgewandten Endbereich des Hohlraums 27 das zweite Sensorelement 36 angebracht. Erstes und zweites Sensorelement 35, 36 stellen zwei zusammengehörige Partialkomponenten eines sensorischen Systems zur Erfassung einer Relativbewegung bzw. eines Verschiebeweges zwischen den beiden Sensorelementen 35, 36 dar. Die Sensorelemente 35, 36 wirken getrennt durch einen Luftspalt über eine Feldkopplung miteinander.

Vorteilhafterweise ist das Sensorelement 35 ein elektrophysikalisch aktives Sensorelement (Messwertnehmerelement) und das Sensorelement 36 eine elektrophysikalisch passive Maßverkörperung (Messwertgeberelement), so dass die elektrischen Anschlussleitungen des Sensorelements 35 über den Sensorkörper 26 zu einer elektronischen Signalverarbeitungsstufe 37 und danach über eine Signalleitung 38 einem Steuergerät zugeführt werden können.

In Fig. 5 a) ist die beispielsgemäße Vorrichtung im Falle keiner wirkenden Bremskraft (F=0) und in Fig. 5 b) im Falle einer wirkenden Bremskraft ($F_{max}$) dargestellt. Da Belagführungsschiene 11b einseitig mechanisch fest mit dem Fahrzeugchassis 10 verbunden ist, welches unter dem Einfluss einer wirkende Bremskraft keiner örtlichen Verschiebung in x-Richtung unterliegt, und wie oben beschrieben durch die bei einer Bremsung erzeugte Reibkraft in x-Richtung (tangential zur Bremsscheibenoberfläche) verformt / geschert wird, kann Belagführungsschiene 11b als Biegefeder genutzt werden. Durch die Sensorvorrichtung 40 wird sozusagen die Auslenkung der Belagführungsschiene 11b (am Sensorelement 36), vorteilhafterweise im Wesentlichen am Ort der maximalen Auslenkung, unter der Kraft $F_{max}$ mit der Auslenkung an einem Bezugsort 49 in der Ebene A-B verglichen. Dazu wird der Bezugsort 49 über den starren Sensorkörper 26 mit Sensorelement 35 mechanisch in den Bereich des Sensorelements 36 (vorteilhafterweise Ort der maximalen Auslenkung) "verschoben" und diesem räumlich mechanisch dergestalt überlagert, dass die Sensorkomponenten 35, 36 elektrophysikalisch zuverlässig zusammenwirken können.

Wie in Fig. 5 b) schematisch angedeutet ist, wird im allgemeinen Fall die Ebene A-B des im wesentlichen ortsfesten Fahrzeugchassis 10 unter Einwirkung der Kraft $F_{max}$ sehr leicht gekrümmt und damit der Sensorkörper 26 um den Winkel $\alpha_1$ (nahe Null) gegen die Lotrechte (im Fall F=0) geneigt. Gleichzeitig verbiegt sich Belagführungsschiene 11b mit Sensorelement 36 um den Winkel $\alpha_2$. Damit verschieben sich die Sensorelemente 35, 36 relativ zu einander um die Differenz $\Delta\alpha = (\alpha_2 - \alpha_1)$ bzw. um das entsprechende Bogenmaß, gleichbedeutend dem relativen Verschiebeweg $\Delta x$. Je geringer die Krümmung der Ebene A-B ist, desto höher ist die sensorische Trennschärfe und erreicht im Idealfall bei $\alpha_1 = 0$ ein Maximum.

Fig. 6 zeigt einen Ausschnitt eines dritten Ausführungsbeispiels einer erfindungsgemäßen Vorrichtung. Schematisch dargestellt ist Belagführungsschiene 11b des beispielsgemäßen Bremshalters 1, welche in der Ebene A-B, z.B. über ein nicht dargestelltes Befestigungselement, mechanisch fest mit dem Chassis des Fahrzeugs 10 verbunden ist. Belagführungsschiene 11b ist mit einer Bohrung 27 versehen, in welcher Sensorvorrichtung 42 angeordnet ist. Sensorvorrichtung 42 umfasst ein erstes Sensorelement 35, ein zweites Sensorelement 36 und einen Sensorkörper 26', welcher als starrer, nadel- oder rohrförmiger Stab ausgebildet ist. Sensorkörper 26' ist mechanisch fest mit dem dem Fahrzeug (10) abgewandten Ende der Belagführungsschiene 11b verbunden und ragt in Richtung des Fahrzeugs in die Bohrung 27. An dem dem Fahrzeug (10) zugewandten Ende des Sensorkörpers 26' ist das zweite Sensorelement 36 angebracht. Im chassisfesten Bereich 49a der Belagführungsschiene 11b ist das erste Sensorelement 35 in Hohlraum 27 angeordnet. Auch hier stellen erstes und zweites Sensorelement 35, 36 zwei zusammengehörige Partialkomponenten eines sensorischen Systems zur Erfassung einer Relativbewegung bzw. eines Verschiebeweges zwischen den beiden Sensorelementen 35, 36 dar. Die Sensorelemente 35, 36 wirken getrennt durch einen Luftspalt über eine Feldkopplung miteinander.

In Fig. 6 a) ist die beispielsgemäße Vorrichtung im Falle keiner wirkenden Bremskraft (F=0) und in Fig. 6 b) im Falle einer wirkenden Bremskraft ($F_{max}$) dargestellt. Auch hier wird Belagführungsschiene 11b als Biegefeder genutzt. Es wird deren Auslenkung unter der Kraft $F_{max}$ mit der Auslenkung am Bezugsort 49a in oder unterhalb der Ebene A-B (49) verglichen, welcher im wesentlichen ortsfesten (abgesehen von einer eventuellen, sehr geringen Krümmung) unter Einwirkung der Kraft $F_{max}$ ist. Dazu wird die Auslenkung über Sensorkörper 26' mit Sensorelement 36 mechanisch an den Bezugsort 49a "verschoben" und diesem räumlich mechanisch dergestalt überlagert, dass die Sensorkomponenten 35, 36 elektrophysikalisch zuverlässig zusammenwirken können.

Im allgemeinen Fall wird die Ebene A-B des im wesentlichen ortsfesten Fahrzeugchassis 10 unter Einwirkung der Kraft $F_{max}$ sehr leicht gekrümmt. Die Verbiegung der einseitig mit dem Chassis des Fahrzeugs 10 verbundenen Belagführungsschiene 11b führt zu einer Winkeldifferenz $\Delta\alpha$ der relativen Lage der Sensorelemente 35, 36, die über die Sensorelemente 35, 36 gemessen wird.

Vorteilhafterweise ist das Sensorelement 35 ein elektrophysikalisch aktives Sensorelement (Messwertnehmerelement) und das Sensorelement 36 eine elektrophysikalisch passive Maßverkörperung (Messwertgeberelement). Ein Vorteil des dritten Ausführungsbeispiels liegt darin, dass das elektrophysikalisch aktive Sensorelement 35 direkt auf einer Schaltplatine 37 angeordnet werden kann.

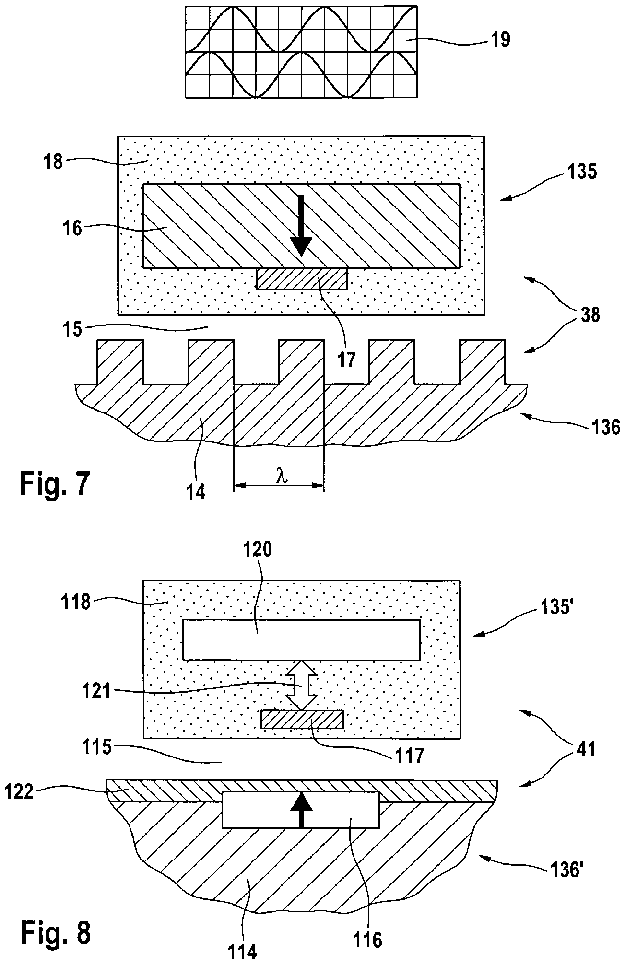

In Fig. 7 ist ein Messprinzip einer beispielhaften Sensorvorrichtung 38 einer erfindungsgemäßen Vorrichtung schematisch dargestellt. Hierbei handelt es sich um ein magnetisches Messprinzip. Ein oder mehrere Teile des Bremshalters 1, vorteilhafterweise die Belagführungsschiene 11b, sind ferromagnetisch ausgebildet. Das oder die Teile sind mit einer Zahnstruktur 14 einer Periodenlänge $\lambda$ (z.B. $\lambda$ = 2 mm) als eine Art Maßverkörperung versehen. Über einen Luftspalt 15 koppelt ein Permanentmagnet 16 an diese ferromagnetische Zahnstruktur 14. Die ferromagnetische Zahnstruktur 14 stellt, unter Einfluss des Permanentmagneten 16, ein Messwertgeberelement 136 ((zweites) Sensorelement) der Sensorvorrichtung 38 dar. In das magnetische Feld zwischen Zahnstruktur 14 und Permanentmagnet 16 ist eine Sensorelementstruktur 17 aus magnetisch empfindlichen Elementen in einem Gehäuse 18 ortsfest angeordnet, d.h. das Messwertnehmerelement 17 der Sensorvorrichtung 38 bzw. das Gehäuse 18 ist derart ausgebildet und an dem Bremshalter 1 angeordnet, dass es bei einer Bremsung nicht, insbesondere nicht in x-Richtung, verformt / ausgelenkt wird. Sensorelementstruktur 17 entspricht einem (ersten) Sensorelement 135 der Sensorvorrichtung 38. Die magnetisch empfindlichen Elemente sind z.B. auf Basis von XMR-Effekten (allgemeine magnetoresistive Effekte) oder des Hall-Effektes technisch derart ausgebildet, dass sie in Bezug auf die Periodenlänge $\lambda$ eine eindeutige vorzeichengerechte Messung eines Verschiebeweges $\Delta x$ ermöglichen. In einem vorteilhaften Ausführungsbeispiel enthält das Messwertnehmerelement 17 zwei AMR-Brücken (AMR: anisotropischer magnetoresistiver Effekt), die intern gegeneinander örtlich um ein Viertel der Periodenlänge $\lambda/4$ versetzt und dergestalt ausgerichtet sind, dass von den zwei AMR-Brücken zwei sinusförmige orthogonale Signale 19 erzeugt werden, die durcheinander dividiert, über die Tangens-Funktion, ein Maß für den Verschiebeweg $\Delta x$ darstellen.

Anstelle eines Messwertgeberelements aus ferromagnetischer Zahnstruktur 14 und Permanentmagnet 16 wird gemäß eines anderen, nicht dargestellten Beispiels eine permanentmagnetische Struktur abwechselnder Nord/Südpole (magnetisierte Encoderspur) mit der Periodenlänge $\lambda$ als Maßverkörperung bzw. Messwertgeberelement 136 verwendet, wobei unter einer Periodenlänge jeweils ein Nord-/Südpolpaar zu verstehen ist. Das Messwertnehmerelement 17 aus magnetisch empfindlichen Elementen kann wie anhand der Fig. 7 ausgeführt ausgebildet sein.

In Fig. 8 ist ein weiteres Ausführungsbeispiel einer Sensorvorrichtung 41 für eine erfindungsgemäße Vorrichtung schematisch dargestellt. Als Maßverkörperung wird ein Permanentmagnet 116 verwendet, welcher mit einem Pol (beispielsgemäß mit seinem Südpol) in ein ferromagnetisches Element 114 des Bremshalters 1, vorteilhafterweise der ferromagnetischen Belagführungsschien 11b, magnetisch kurzschlussfrei eingebettet ist, und dessen anderer Pol (beispielsgemäß der Nordpol) durch eine magnetisch nicht wirksame Schicht 122 gegen mechanische Einflüsse geschützt ist. Permanentmagnet 116, als Messwertgeberelement 136' ((erstes) Sensorelement) der Sensorvorrichtung 41, koppelt über Luftspalt 115 an eine Sensorelementstruktur 117 aus magnetisch empfindlichen Elementen, die als Messwertnehmerelement 135' ((zweites) Sensorelement) in ein Gehäuse 118 eingelagert ist, welches ortsfest derart an dem Bremshalter angeordnet ist, dass es bei einer Bremsung nicht wesentlich, insbesondere nicht wesentlich in x-Richtung, verformt / ausgelenkt wird. Beispielsgemäß ist die Sensorelementstruktur 117 über Leitungsverbindungen 121 mit einer integrierten elektronischen Auswerteschaltung 120 verbunden.

Gemäß einem weiteren, nicht dargestellten Ausführungsbeispiel einer Sensorvorrichtung wird als Maßverkörperung nicht ein einzelner Permanentmagnet 116 (wie anhand von Fig. 8 beschrieben) sondern eine permanentmagnetische Multipolstruktur verwendet.

Die magnetisch empfindlichen Elemente sind vorteilhafterweise auf Basis von XMR-Effekten (allgemeine magnetoresistive Effekte) technisch so ausgebildet, dass sie in Verbindung mit einem permanentmagnetischen Luftspaltfeld von ca. 20 mT eine eindeutige vorzeichengerechte Messung eines Verschiebeweges $\Delta x$ des Permanentmagnets 116 ermöglichen. In einem besonders vorteilhaften Ausführungsbeispiel enthält die Sensorelementstruktur 117 zwei AMR-Brücken (AMR: anisotropischer magnetoresistiver Effekt), die intern gegeneinander örtlich versetzt und dergestalt ausgerichtet sind, dass zwei sinusförmige orthogonale Signale erzeugt werden, die durcheinander dividiert, über die Tangens-Funktion, ein Maß für den Verschiebeweg $\Delta x$ sind.

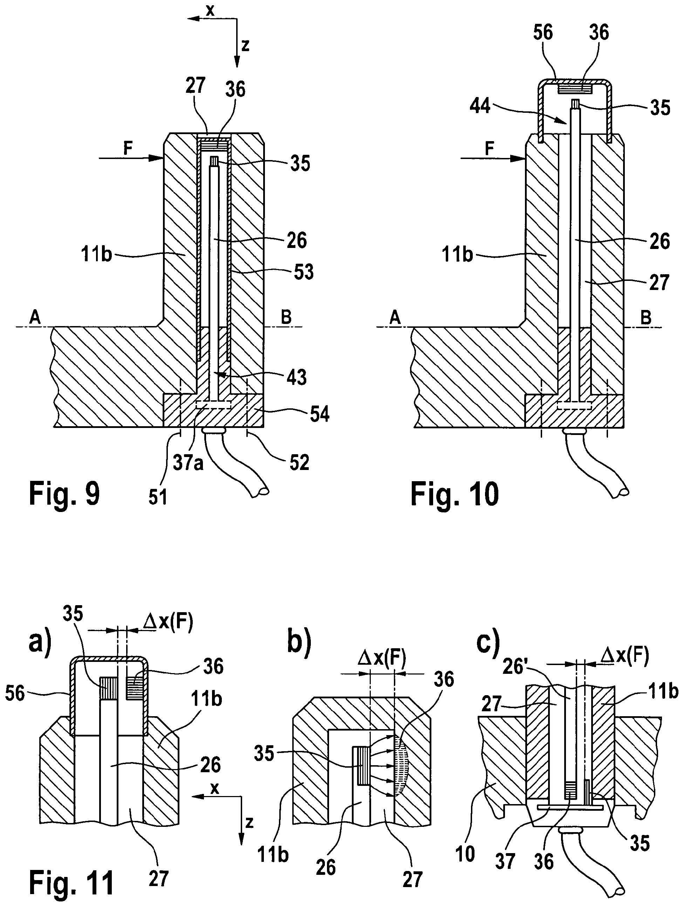

Fig. 9 zeigt einen Ausschnitt eines vierten Ausführungsbeispiels einer erfindungsgemäßen Vorrichtung. Hierbei ist die Sensorvorrichtung 43 als eine Kartusche ausgebildet, welche in eine Bohrung 27 in Belagführungsschiene 11b einschiebbar und über schematisch angedeutete Befestigungsmittel 51, 52 an der Belagführungsschiene 11b befestigbar ist. Die Kartusche besitzt oberhalb der Ebene A-B ein dünnwandiges, biegefähiges Gehäuse 53, das den Sensorkörper 26 umgibt und gleichzeitig in seinem Kopfende Sensorelement 36 aufnimmt und dieses dem Sensorelement 35 mit definiertem Luftspalt gegenüberstellt. Der Kartuschenkörper 54 unterhalb der Ebene A-B ist starr und fest ausgeführt und beinhaltet zugleich die erforderliche Signalaufbereitungsstufe 37a. Ein Vorteil der Sensorvorrichtung als Kartusche besteht in der Möglichkeit einer separaten Fertigung, Kalibrierung, Korrekturwertbestimmung und Erprobung der Sensorvorrichtung vor einem Einbau in der Belagführungsschiene 11b.

Fig. 10 zeigt einen Ausschnitt eines fünften Ausführungsbeispiels einer erfindungsgemäßen Vorrichtung. Beispielsgemäß ragt Sensorkörper 26 mit Sensorelement 35 aus der Bohrung 27 der Belagführungsschiene 11b heraus. Sensorelement 36 der Sensorvorrichtung 44 ist in einer Kappe 56 angeordnet, die ihrerseits durch eine geeignete mechanische Verbindung mit der Belagführungsschiene 11b verbunden bzw. verbindbar ist. Kappe 46 besteht aus einem Material, das den sensorischen Vorgang nicht störend beeinflusst. Neben der in Fig. 10 dargestellten Ausführungsvariante mit Kappe 56 ist auch eine Ausführung mit aus der Bohrung 27 herausragenden Kartusche denkbar, welche insbesondere dann vorteilhaft ist, wenn die Sensorelemente 35, 36 aus technischen Gründen nicht im Inneren der Bohrung 27 untergebracht werden sollen oder das metallische Umfeld der Belagführungsschiene 11b den sensorischen Effekt beeinträchtigt. Ausführungsbeispiele mit herausragendem Sensorkörper 26 bieten den zusätzlichen Vorteil, geringe Auslenkungen der Belagführungsschiene 11b durch eine geeignete Wahl der Kappenhöhe (bzw. Kartuschenlänge) nach dem Prinzip des verlängerten Messzeigers mechanisch zu verstärken.

In den Ausführungsbeispielen der Fig. 5, 6, 9 und 10 sind die Sensorelemente 35, 36 senkrecht zur Bremsscheibe (in z-Richtung) zueinander angeordnet. Eine vorteilhafte technische Realisierung besteht darin, das Sensorelement 35 als magnetoresistives Winkel-Messelement und das Sensorelement 36 als dazu angepasste permanentmagnetische Struktur auszuführen. Dies kann z.B. einer der beiden Pole eines zylinder- oder flächenhaften Permanentmagneten sein, der auf das Winkel-Messelement gerichtet ist oder eine permanetmagnetische Multipolstruktur, die so ausgelegt sind, dass sie jeweils in den internen, örtlich zueinander versetzten Messbrücken des Winkel-Messelements zwei orthogonale sinusförmige Signale erzeugen, die durcheinander dividiert, über die Tangensfunktion ein Maß für die Winkeldifferenz $\Delta\alpha$ sind.

Fig. 11 zeigt drei Ausführungsbeispiele in denen die Sensorelemente 35, 36 parallel zur Bremsscheibe (in x-Richtung), also waagerecht zueinander, angeordnet sind. Hierbei ist Sensorelemente 35 im weitesten Sinn eine elektrophysikalisch aktive Feldsonde und Sensorelemente 36 eine elektrophysikalisch passive Maßverkörperung, wobei deren Relativbewegung $\Delta x(F)$ zueinander als Maß für die wirkende Bremskraft F gewertet wird.

In dem Ausführungsbeispiel gemäß der Fig.11 a) ragt Sensorkörper 26 mit Sensorelement 35 auf der Fahrzeugabgewandten Seite aus der Bohrung 27 der Belagführungsschiene 11b heraus. Sensorelement 36 ist in einer Kappe 56 angeordnet, wobei Sensorelement 35 und Sensorelement 36 in x-Richtung ausgerichtet sind. Dieses Beispiel ist von Vorteil, wenn die Sensorelement 35, 36 aus technischen Gründen nicht im Inneren der Bohrung 27 untergebracht werden sollen oder das metallische Umfeld der Belagführungsschiene 11b den sensorischen Effekt beeinträchtigt. Z.B. kann Sensorelement 35 als Spule eines Schwingkreises und Sensorelement 36 als ein Ferritkern, der an die Spule angenähert oder mehr oder weniger in sie hinein geschoben wird, realisiert sein. Die mit der Relativbewegung $\Delta x(F)$ verbundene Verschiebung der Resonanzfrequenz wird ausgewertet. Dies kann dadurch geschehen, dass der Schwingkreis Teil eines Oszillators ist, dessen Schwingfrequenz ausgezählt wird oder durch Messung der veränderlichen Resonanzspannung bei konstanter Betriebsfrequenz.

Das Ausführungsbeispiel der Fig.11 b) ist ähnlich dem Ausführungsbeispiel der Fig. 5, jedoch mit in x-Richtung ausgerichteten Sensorelementen 35, 36. Hierbei ist Sensorelement 35 als unidirektionale Feldsonde ausgebildet, die an die metallische Oberfläche der Belagführungsschiene 11b koppelt, die damit zugleich als Maßverkörperung (Sensorelement 36) genutzt wird. Die Feldsonde kann sowohl magnetische als auch elektrische Felder nutzen und ist nach bekannten Prinzipien realisierbar. Bekannte Prinzipien zur Nutzung magnetischer Feldwirkungen sind z.B. Induktionsspulen, deren unidirektionale Wirkungsweise durch Verwendung von besonders geformten Ferritkernen, z.B. U-Kerne, Schalenkerne etc., erreicht wird, oder auch permanentmagnetisch vorgespannte AMR-Brücken (AMR = Anisotrop-Magneto-Resistiv) oder Hall-Elemente. Zur Nutzung elektrischer Felder kann Sensorelement 35 als bewegliche aktive oder passive Flächenelektrode gegenüber der ortsfesten Oberfläche der Belagführungsschiene 11b ausgeführt sein, um einen aktiven oder passiven Kondensator veränderlicher Kapazität zu erzeugen, wobei unter "aktiv" die permanentelektrische Vorspannung durch Verwendung eines Elektrets zu verstehen ist.

Das Ausführungsbeispiel der Fig. 11 c) ist ähnlich dem Ausführungsbeispiel der Fig. 6 mit einem auf der fahrzeugabgewandten Seite an der Belagführungsschiene 11b befestigten Sensorkörper 26', jedoch sind die Sensorelemente 35, 36 in Fig. 11 c) in x-Richtung ausgerichtet. Wie im Ausführungsbeispiel der Fig. 11 b) ist Sensorelement 35 als unidirektionale Feldsonde ausgebildet. Ein Vorteil dieser Anordnung besteht in der direkten Montagemöglichkeit des Sensorelements 35 auf der Platine 37.

Ein genereller Vorteil der Ausführungsbeispiele gemäß den Fig. 5, 6, 9-11 besteht darin, dass die Sensorelemente 35, 36 durch Einbau in eine metallische Umgebung (Belagführungsschiene 11b) nicht nur mechanisch geschützt, sondern zugleich gegen magnetische und elektrische Störeinflüsse abgeschirmt sind.

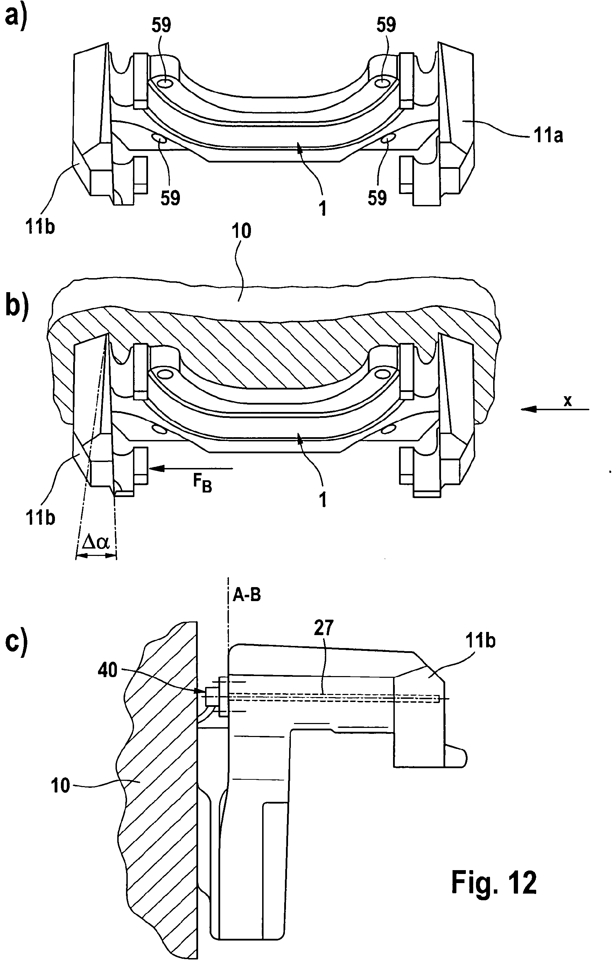

In Fig. 12 ist ein beispielsgemäßer Bremshalter mit schematisch angedeuteter Sensorvorrichtung (Bremshalter mit sensorischer Funktion) sowie dessen Anordnung am Fahrzeug 10 dargestellt. Fig. 12 a) zeigt Bremshalter 1, der über Befestigungslöcher 59 mit dem Chassis des Fahrzeugs 10 ortsfest verschraubbar ist, wie in Fig. 12 b) dargestellt ist. Chassis 10 unterliegt unter dem Einfluss einer Bremskraft $F_B$ im Wesentlichen keiner örtlichen Verschiebung parallel zur Bremsscheibe (x-Richtung). Bremshalter 1 umfasst zwei Belagführungsschienen 11a, 11b für die Reibbelagsträger (nicht dargestellt). Wie in Fig. 12 c) angedeutet ist, ist Belagführungsschiene 11b mit einer Bohrung 27 versehen, in welcher beispielsgemäß Sensorvorrichtung 40 angeordnet ist. Andere Ausführungsvarianten der Sensorvorrichtung sind auch möglich. Unter dem Einwirken der Bremskraft $F_B$ werden die Belagführungsschienen 11a, 11b in Bezug auf die Ebene A-B verbogen, wie es hier beispielhaft für die sensorisch ausgestattete Belagführungsschiene 11b als Differenzwinkel $\Delta\alpha$ dargestellt ist. Die Darstellung ist zur Verdeutlichung stark übertrieben. In der Praxis ist mit maximalen Bogenmaßen im Bereich unter 300 $\mu$m zu rechnen.

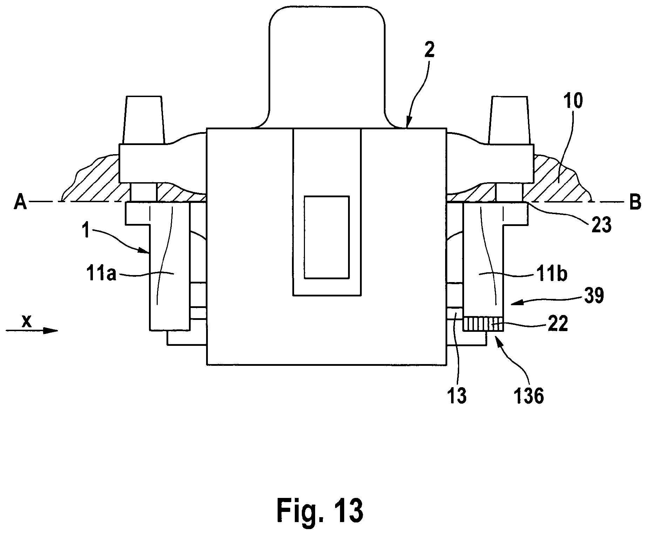

In Fig. 13 ist schematisch ein weiteres Ausführungsbeispiel einer erfindungsgemäßen Vorrichtung dargestellt. Bremshalter 1, der zwei Belagführungsschienen 11a, 11b umfasst, ist in der Ebene A-B fest mit dem Radträger bzw. dem Chassis des Fahrzeugs 10 verbunden. Belagführungsschiene 11b ist mit einer Maßverkörperung 22, z.B. in Form einer Zahnstruktur, versehen. Maßverkörperung 22 ist vorteilhafterweise an dem äußeren Ende der Belagführungsschiene 11b angeordnet, da am äußeren Ende der Belagführungsschiene der maximal messbare Verschiebeweg $\Delta x$ auftritt relativ zur Lage der Belagführungsschiene im ungebremsten Zustand bzw. relativ zu einem Ort 23 an der Halter-Befestigungs-Ebene A-B, welcher sich im gebremsten und ungebremsten Zustand nicht (in x-Richtung) verändert. Maßverkörperung 22 stellt ein (zweites) Sensorelement 136 einer Sensorvorrichtung 39 dar. Ein Messwertnehmerelement der Sensorvorrichtung 39 ist in Fig. 13 der besseren Übersichtlichkeit wegen nicht dargestellt.

Um den Verschiebeweg $\Delta x$ der Maßverkörperung möglichst genau erfassen zu können, wird das Messwertnehmerelement der Sensorvorrichtung 39 beispielsgemäß in einen in sich mechanisch steifen Sensorkörper integriert, dessen Befestigung halterseitig an der Befestigungsebene A-B erfolgt, so dass der Sensorkörper und damit das Messwertnehmerelement stets ortsunveränderlich, z.B. orthogonal, zur Befestigungsebene A-B ausgerichtet bleibt, während sich die Maßverkörperung in Abhängigkeit von der Umfangskraft (Bremskraft) über die elastische Belagführungsschiene relativ zum Sensorkörper / Messwertnehmerelement verschiebt.

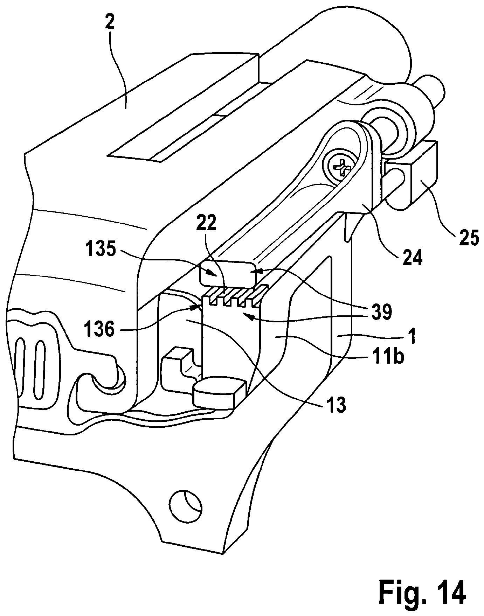

In Fig. 14 ist das Ausführungsbeispiel aus Fig. 13 mit Blick auf die Faust der Scheibenbremse dargestellt. Im Unterschied zu Fig. 13 ist in Fig. 14 auch ein Messwertnehmerelement der Sensorvorrichtung 39 umfassend Sensorkörper 24 mit Steckdose 25 zum Anschluss eines Sensorkabels und Sensorelement 135 dargestellt. Belagführungsschiene 11b wirkt als Messfeder, welche sich bei einer Bremsung verformt / verschiebt, und trägt an ihrem Ende eine Maßverkörperung 22 zum Zusammenwirken mit den (in Fig. 14 nicht im einzelnen dargestellten) magnetisch empfindlichen Elementen ((erstes) Sensorelement 135), welche in oder an Sensorkörper 24 angeordnet sind. Sensorkörper 24 ist mechanisch steif ausgeführt und halterseitig in der Befestigungsebene A-B an einem Führungsbolzen befestigt, so dass Sensorkörper 24 auch bei Bremsungen orthogonal zur Befestigungsebene A-B ausgerichtet bleibt.

Vorteilhafterweise ist das Messwertnehmerelement durch weitere geeignete konstruktive Maßnahmen gegen mechanische Beschädigungen geschützt.

Ein Vorteil der Erfindung besteht darin, dass die Bremshaltermechanik 1, 11a, 11b zugleich als Sensormechanik genutzt wird. Die Bremshaltermechanik ist vorteilhafterweise derart konstruiert, dass die beteiligten Maschinenelemente sowohl den Festigkeitsanforderungen als auch zugleich den Anforderungen bezüglich der Messauflösung des Verschiebeweges $\Delta x$ genügen.

Die Steifigkeit der Bremshaltermechanik, d.h. der Zusammenhang (Kennlinie) zwischen einer Bremsenstellgröße E (z.B. Bremsdruck p oder Motorstrom I oder Bremspedalstellung $L_{Pedal}$) und Verschiebung $\Delta x$ des Bremshalters, ist unter Prüfstandsbedingungen zumindest für eine Scheibenbremse mit unverbrauchten Reibbelägen aus der Konstruktion oder anhand von Testmessungen bekannt. Ebenso ist daher auch die Steifigkeit der Bremshaltermechanik in Abhängigkeit von der effektiv wirksamen Länge der Belagführungsschienen (d.h. je nach Abnutzung insbesondere des äußeren Reibbelags) unter Prüfstandsbedingungen aus Messungen bekannt.

Um durch Verschleiß bedingte Kennlinienverschiebungen der Scheibenbremse während des normalen Fahrbetriebs erkennen und die gemessene Verschiebung $\Delta x$, welche zur Bremsregelung herangezogen werden soll, gegebenenfalls entsprechend korrigieren zu können, sind die beteiligten Elemente der Bremshaltermechanik vorteilhafterweise derart ausgeführt, dass sich aus dem Zusammenwirken der Elemente der Bremshaltermechanik ein Zusammenhang (eine Kennlinie) zwischen Bremsstellgröße E (z.B. Bremsdruck p oder Motorstrom I oder Bremspedalstellung $L_{Pedal}$) und Position X (bzw. Verschiebung $\Delta x$) des Bremshalters ergibt, welcher ausreichend markante Kennlinienmerkmale bzw. Indizes besitzt. Zu diesem Zweck werden beispielsgemäß die Hammerköpfe des äußeren Reibbelagträgers 13 als Messmittel genutzt und derart ausgeführt, dass ihr Zusammenspiel mit den Hammerkopfhaltern 12a, 12b der Belagführungsschienen 11a, 11b ein charakteristisches Verhalten (Kennlinienverlauf) beim Zuspannen/Lösen der Bremse (Push/Pull-Verhalten) bewirkt.

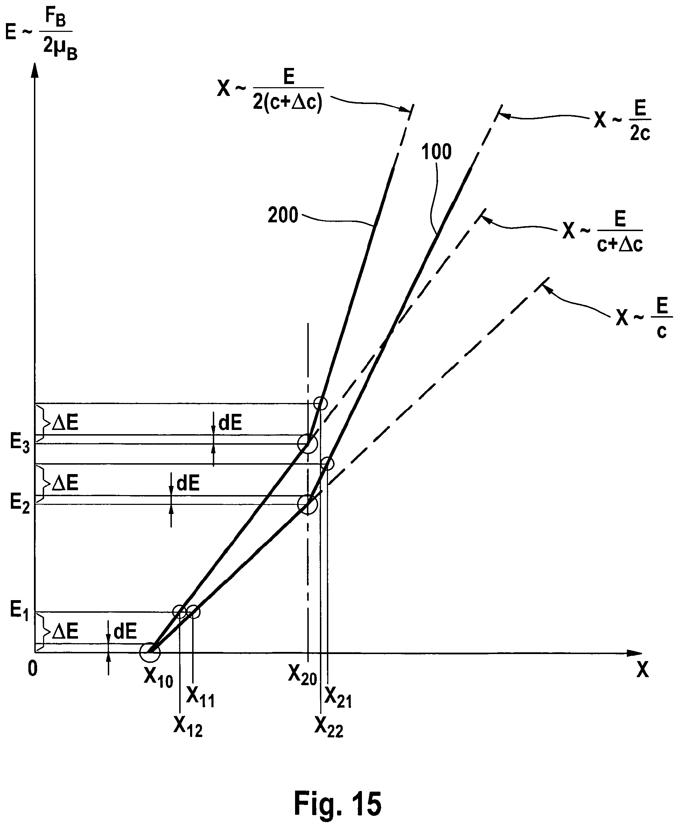

In Fig. 15 ist eine beispielhafte Kennlinie 100 einer beispielsgemäßen Scheibenbremse schematisch abgebildet. In dem Diagramm ist ein Zusammenhang zwischen einer Bremsstellgröße E und der Position X des Bremshalters, z.B. am Orte eines Messwertgebers einer Sensorvorrichtung, dargestellt. Die Position X=0 entspricht hierbei z.B. dem ungebremsten Zustand, d.h. bei einer Bremsung stellt Position X beispielsgemäß auch den Verschiebeweg $\Delta$x dar.

Die Bremsenstellgröße E repräsentiert ein Maß für die Betätigung der Scheibenbremse und ist proportional zu dem Quotienten aus wirkender Bremskraft $F_B$ und Reibwert $\mu_B$ zwischen Bremsscheibe und Reibbelägen:

$$E \sim \frac{F_B}{2\mu_B}$$

Die daraus resultierende Verschiebung X bzw. $\Delta$x stellt also ein Maß für die wirkende Bremskraft $F_B$ dar. Bremsenstellgröße E kann für eine hydraulisch betätigbare Bremse z.B. als das Produkt von Bremsdruck p und Kolbenfläche A verstanden werden (E=pA). Im Falle einer elektromechanischen Bremse mit einem Stellmotor ist Bremsenstellgröße E z.B. eine (bekannte) Funktion des Motorstroms I (E=f(I)). Für elektrische Bremse kann Bremsenstellgröße E eine (bekannte) Funktion des Bremspedalwinkels oder -wegs $L_{Pedal}$ sein (E=f($L_{Pedal}$)).

Die Lage der für die Kennlinien charakteristischen Positionen $X_{10}$, $X_{20}$ wird durch die Ausführung der Hammerkopfpassung festgelegt (eingestelltes Push/Pull-Verhalten der Hammerkopfpassung). Im Folgenden soll zunächst der Verlauf der Kennlinie 100 beschrieben werden. Beginnend mit einer Bremsung aus dem ungebremsten Zustand X=0, legt die Bremse bei der Position $X_{10}$ an und beginnt mit dem Pull-Betrieb, d.h. der durch die Bremsscheibe mitgezogene Hammerkopf verformt die erste Belagführungsschiene in Zugrichtung, ohne dass der zweite Hammerkopf an seiner (zweiten) Belagführungsschiene anliegt. Hierdurch ergibt sich ein Verlauf der Kennlinie 100 im unteren Bereich $X_{10}<X<X_{20}$ gemäß X=E/c, wobei c die (bekannte) Federkonstante der Belagführungsschienen (für eine feste axiale Position des äußeren Reibbelagträgers). Das geometrische Spiel zwischen dem zweiten Hammerkopf und seiner zugehörigen Belagführungsschiene ist so bemessen, dass der zweite Hammerkopf bei Erhöhung der Bremsenstellgröße E bei der Position $X_{20}$ an der zweiten Belagführungsschiene anliegt und dann seinen Pull-Betrieb aufnimmt, d.h. durch die Bremsscheibe geschoben, seine Belagführungsschiene in Druckrichtung verformt. Die Verformungen der Belagführungsschiene addieren sich zu der resultierenden Position/Verschiebung X auf, weshalb für die zugehörige Kennlinie 100 im oberen Bereich $X>X_{20}$ X=E/ (2*c) gilt.

Kennlinie 100 des Bremshalters kann z.B. bei der Herstellung der Bremse vermessen und ein einem Steuer- und Regeleinheit der Bremsanlage abgespeichert werden.

Die beispielhafte Kennlinie 100 besitzt zwei charakteristische Werte der Verschiebung $X_{10}$, $X_{20}$. Eine weiter unten beschriebene Korrektur der Verschiebung ist jedoch auch mit nur einem einzelnen charakteristischen Wert möglich. Hierzu werden z.B. die Halterungen zwischen Belagführungsschienen und Reibbelagträger derart ausgeführt, dass die Bremse bei der Position $X_{10}$ anlegt, wobei gleich beide Hammerköpfe an den Belagführungsschienen anliegen. Hierdurch ergibt sich z.B. ein Verlauf der Kennlinie mit X=E/(2*c) für $X>X_{10}$. Die eine Knickstelle bei $X_{10}$ ist als charakteristischer Bezugspunkt ausreichend.

Die (bekannte) Kennlinie inklusive Knickstellen $X_{10}$, $X_{20}$ kann durch Messung der Bremsenstellgröße E (z.B. des Radbremsdruckes p mittels Drucksensor bei einer hydraulisch betätigbaren Bremse oder des Motorstroms I oder der Bremspedalbetätigung $L_{Pedal}$) und der durch die zugehörige Bremskraftwirkung hervorgerufene Verschiebung $\Delta$x in Richtung senkrecht zu der axialen Richtung der Bremsscheibe während des Fahrbetriebs überprüft/bestätigt werden.

Vorteilhafterweise wird die Bremshalter/Sensor-Mechanik derart ausgelegt, dass die Knickstellen $X_{10}$, $X_{20}$ der Kennlinie 100 und deren unvermeidliche Verrauschtheit beim Fahrbetrieb durch einen möglichst geringen Unterschied dE der Bremsenstellgröße sicher erkannt werden können, d.h. die Auflösung der Positions-/Verschiebewegsensorik ist ausreichend hoch.

Kennlinie 100, welche einer neuwertigen Bremsscheibe entspricht, kann in einer Steuer- und Regeleinheit als Datensatz und in Form eines algebraischen Zusammenhangs mit bekannten Parametern (wie z.B. der Federkonstante c der Belagführungsschienen) abgelegt werden. Während des Betriebs der Bremse werden Wertepaare aus anliegender Bremsenstellgröße E und zugehöriger Verschiebung $\Delta$x erfasst und mit der abgelegten Kennlinie verglichen. Stimmen die erfassten Wertepaare im Wesentlichen mit der Kennlinie überein, so kann die gemessene Verschiebung $\Delta$x ohne weitere Korrektur (direkt oder nach Umrechung in eine Bremsenstellgröße mittels der (überprüften) Kennlinie) zur Bremsregelung herangezogen werden.

Bedingt durch den allmählichen Verschleiß der Reibbeläge verschiebt sich der im Wesentlichen zur Verschiebung $\Delta$x beitragende äußere Reibbelagträger axial in Richtung zur Bremsscheibe. Folglich werden die zur Messung wirksamen Längen der Belagführungsschiene vermindert, d.h. die wirksame Federkonstante nimmt von c auf c+$\Delta$c zu. Entsprechend ergibt sich nun eine beispielhafte Kennlinie 200, welche in Fig. 10 abbildet ist. Die Knickstellen $X_{10}$, $X_{20}$ der Kennlinie 200 liegen dabei wie bei der Kennlinie 100. Der Verlauf der Kennlinie 100 ist im unteren Bereich $X_{10}<X<X_{20}$ durch X=E/(c+$\Delta$c) und im oberen Bereich $X>X_{20}$ durch X=E/(2*(c+$\Delta$c)) gegeben.

Wird nun also während des Betriebs der Brem-

se bei einer Bremsenstellgröße $E_1$ nicht mehr die Verschiebung $X_{11}$ sondern eine kleinere Verschiebung $X_{12}$ gemessen, so wird daran erkannt, dass ein signifikanter Bremsbelagverschleiß aufgetreten ist und dass die gemessene Verschiebung $X_{12}$ korrigiert werden muss, ehe sie zur Bremsdruckregelung oder weiteren Auswertung herangezogen werden kann. Aus der (bekannten) Erhöhung $\Delta E$ der Bremsenstellgröße und der zugehörigen relativen Verschiebung $X_{12}$-$X_{10}$ kann auf die aktuell wirksame Steifigkeit geschlossen werden (c+$\Delta$c), welche dann zur Korrektur der gemessenen Verschiebung $X_{12}$ herangezogen wird. Entsprechend kann während der Überwachung der Kennlinie festgestellt werden, dass der Knick der Kennlinie bei der Knickstelle $X_{20}$ aufgrund des Verschleißes der Reibbeläge nicht mehr bei einer Bremsenstellgröße $E_2$ sondern bei einer Bremsenstellgröße $E_3$ auftritt. Eine Erhöhung $\Delta E$ führt dann zu einer (gegenüber dem Ausgangszustand $X_{21}$-$X_{20}$) verminderten relativen Verschiebung $X_{22}$-$X_{20}$, aus welcher auf die aktuelle Steifigkeit ($2*(c+\Delta c)$) geschlossen werden kann. Die bestimmte Steifigkeit wird zur Korrektur der gemessenen Verschiebung $X_{22}$ herangezogen.

Um eine Adaption an den Verschleiß der Reibbeläge durchzuführen, wird also der Umstand genutzt, dass die Lage der Knickpunkte $X_{10}$, $X_{20}$ trotz Reibbelagverschleiß erhalten bleibt oder sich in bekannter Weise verändert. Die Knickpunkte $X_{10}$, $X_{20}$ können somit weiterhin als charakteristische Bezugspunkte genutzt werden.

Die gemessene bzw. korrigierte Verschiebung $\Delta x$ bzw. eine aus $\Delta x$ bestimmte Bremsenstellgröße E stellt für eine Bremsung, d.h. wenn das Kraftfahrzeug verzögert wird, ein Maß für die wirkende Bremskraft dar, solange kein Rutschen oder Gleiten des der Scheibenbremse zugeordneten Rades auftritt.

Im Falle eines Fahrzeugstillstandes und gleichzeitig betätigter Bremse, z.B. an einem Hang, entspricht die Reibkraft der Bremse der Hangabtriebskraft. Entsprechend kann aus der auftretenden Verschiebung $\Delta x$ eine Maßgröße für den Neigungswinkel des Fahrzeugs und/oder für die auf das Fahrzeug wirkende Hangabtriebskraft bestimmt werden.

Weiterhin kann die Erfindung zur Bestimmung des aktuellen Reibwertes zwischen Fahrbahn und Reifen genutzt werden, was insbesondere bei Niedrigreibwert (Schnee, Eis) vorteilhaft ist. Hierzu wird das Rad kurzzeitig zum Blockieren gebracht und die gemessenen Verschiebung $\Delta x$ als Maß für die auftretende Reibkraft zwischen Fahrbahn und Reifen gewertet.

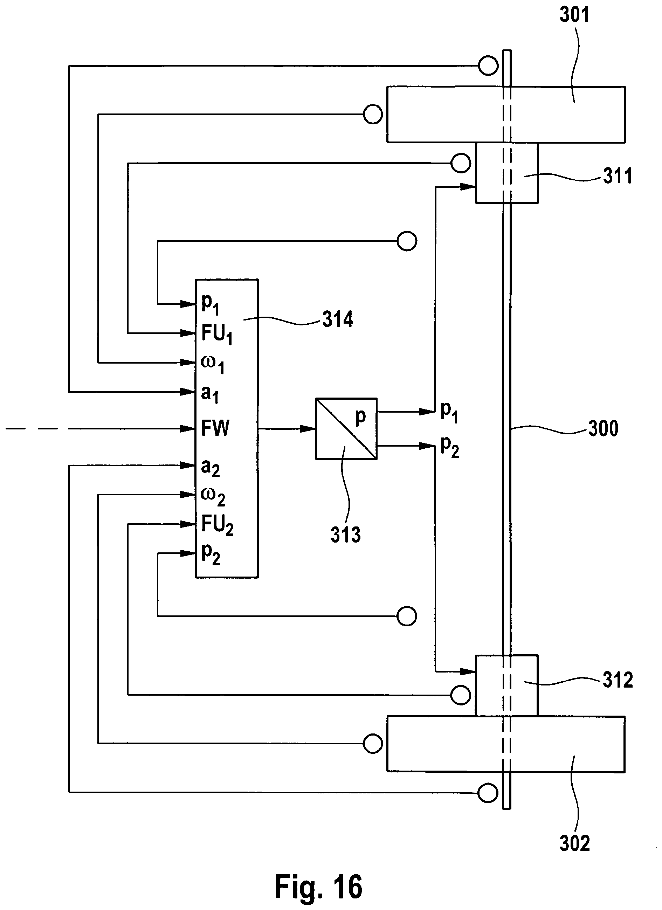

Fig. 16 zeigt eine schematische Darstellung eines Ausführungsbeispiels eines erfindungsgemäßen Verfahrens anhand einer Fahrzeugachse. An Fahrzeugachse 300 sind zwei Räder 301, 302 mit jeweils zugehöriger hydraulisch betätigbaren Scheibenbremse 311, 312 angeordnet, welche über eine elektronische Regeleinheit 314 in Abhängigkeit von einem Fahrerbremswunsch FW mittels eines hydraulischen Aktuators 313 mit Drücken $p_1$, $p_2$ angesteuert werden. Regeleinheit 314 regelt die Drücke $p_1$, $p_2$ separat voneinander unter Maßgabe der für eine bestimmte Bremsregelfunktion (z.B. ABS (Antiblockiersystem), TCS (Traktionskontrolle) oder ESC (Elektronische Stabilitätskontrolle)) aneinander angepassten Sollbremsmomente. Regeleinheit 314 erhält dazu von jeder Scheibenbremse 311, 312 ein Signal $FU_1$, $FU_2$, welches die aktuell wirkende Bremskraft (bzw. das Bremsmoment) repräsentiert. Signal $FU_1$, $FU_2$ kann z.B. das sensorische Signal der Verschiebung $\Delta x$, welche von einer Sensorvorrichtung 38, 39, 40, 41 wie oben beschrieben geliefert wird, oder ein daraus bestimmtes Signal, wie z.B. eine daraus ermittelte Bremskraft $F_B$, sein. Regeleinheit 314 verwendet weiterhin einige der in vielen Fahrzeugen aufgrund der oben genannten Bremsregelfunktionen ohnehin vorhandenen sensorischen Zusatzinformationen, wie die eingestellten hydraulischen Drücke $p_1$, $p_2$ (z.B. mittels Drucksensoren gemessen), die Raddrehzahlen $\omega_1$, $\omega_2$ der Räder 301, 302 (z.B. mittels Raddrehzahlsensoren gemessen) und die vertikale Achsbeschleunigungen $a_1$, $a_2$.

Das beispielsgemäße Verfahren nutzt den Umstand, dass die Umfangskräfte an den beiden Bremsen 311, 312 der Achse 300 für viele Bremsregelfunktionen nicht als absolute Größen bekannt sein müssen. Es reicht oftmals aus, nur das Größenverhältnis der Umfangskräfte zueinander gezielt zu kontrollieren. Hierzu ist es ausreichend, wenn sich die Messungen an den beiden Bremsen einer Achse auf die gleiche repräsentative Kraftkomponente pro Bremse beziehen, d.h. wenn an beiden Bremsen jeweils eine Verschiebung $\Delta x$ mit einer Bremshalter/Sensor-Mechanik, z.B. gemäß der Erfindung, gemessen wird.

Die Verschiebung $\Delta x$ wird aufgrund der längeren effektiv wirksamen Länge der Belagführungsschienen im Wesentliche durch den äußeren Reibbelag bestimmt. Der Umstand, dass die Reibwerte der inneren und äußeren Reibbeläge zeitweise durch Umwelteinflüsse partiell unterschiedlich beeinflusst werden können, kann beispielsgemäß durch Kausalitätsberechnungen unter Einbeziehung zusätzlicher sensorischer Informationen aus dem Bereich Rad / Federbein / Achse erkannt und bei der Regelung ausreichend berücksichtigt werden. Daher werden Regeleinheit 314 beispielsgemäß die hydraulischen Drücke $p_1$, $p_2$, die Raddrehzahlen $\omega_1$, $\omega_2$ und die vertikalen Achsbeschleunigungen $a_1$, $a_2$ zur Verfügung gestellt, um die erwähnten Kausalitätsberechnungen durchführen zu können. In einer vorteilhaften Variante der Kausalitätsberechnungen wird auch die Frequenzmodulation der Radwinkelgeschwindigkeiten bzw. Raddrehzahlen $\omega_1$, $\omega_2$ berücksichtigt.

Ein erfindungsgemäßes Verfahren wird z.B. in Betriebsbremsvorgängen sowie in elektronisch geregelten Bremsvorgängen angewendet und trägt zur Verbesserung des Komforts bei.

**Patentansprüche**

1. Bremshalter (1) zur Ermittlung einer Maßgröße für eine wirkende Bremskraft ($F_B$) oder Reibkraft an einer Scheibenbremse (311, 312) eines Kraftfahrzeugs, welcher an dem Kraftfahrzeug (10) befestigbar (A-B) ist, wobei der Bremshalter (1) zumindest zwei eine Bremsscheibe (8) übergreifende Belagführungsschienen (11a, 11b), an welchen beiderseits der Bremsscheibe (8) angeordnete Reibbeläge (7, 9) in axialer Richtung (z) der Bremsscheibe (8) begrenzt verschiebbar führbar sind, und eine Sensorvorrichtung (38, 39, 40, 41, 42, 43, 44) umfasst, wobei die Sensorvorrichtung ein erstes (35, 135, 135') und ein zweites (36, 136, 136') Sensorelement aufweist, deren Relativbewegung gemessen wird, **dadurch gekennzeichnet, dass** mittels der Sensorvorrichtung eine durch eine Bremskraftwirkung hervorgerufene Verschiebung ($\Delta x$) einer der Belagführungsschienen (11b) in Richtung (x) senkrecht zu der axialen Richtung (z) der Bremsscheibe (8) gemessen wird, wobei das erste Sensorelement (35, 135, 135') und das zweite Sensorelement (36, 136, 136') jeweils starr an dem Bremshalter (1) angebracht sind.

2. Bremshalter (1) nach Anspruch 1, **dadurch gekennzeichnet, dass** die Sensorvorrichtung (38, 39, 40, 41, 42, 43, 44) einen steifen, insbesondere stabförmigen, Sensorkörper (24, 26, 26') umfasst, welcher einseitig mit einem Teil des Bremshalters (1), insbesondere mit der Belagführungsschiene (11b), starr verbunden ist und an welchem, insbesondere in einem Bereich des freien Endes des Sensorkörpers (24, 26, 26'), das erste (35, 135, 135') oder das zweite Sensorelement (36, 136, 136') angebracht ist.

3. Bremshalter (1) nach Anspruch 2, **dadurch gekennzeichnet, dass** der Sensorkörper (24, 26, 26') sich entlang der Belagführungsschiene (11b) über die Bremsscheibe (8) erstreckt.

4. Bremshalter (1) nach Anspruch 2 oder 3, **dadurch gekennzeichnet, dass** der Sensorkörper (24, 26) mit einem seiner Enden im Bereich der fahrzeugseitigen Befestigung (A-B) des Bremshalters (1) an dem Bremshalter (1), insbesondere an der Belagführungsschiene (11b), befestigt ist, dass an dem anderen Ende des Sensorkörpers (24, 26) das erste Sensorelement (35, 135, 135') angeordnet ist und dass das zweite Sensorelement (36, 136, 136') in einem Bereich des fahrzeugabgewandten Endes der Belagführungsschiene (11b) angeordnet ist.

5. Bremshalter (1) nach Anspruch 2 oder 3, **dadurch gekennzeichnet, dass** der Sensorkörper (26') mit einem seiner Enden an dem fahrzeugabgewandten Ende der Belagführungsschiene (11b) befestigt ist, dass an dem anderen Ende des Sensorkörpers (26') das zweite Sensorelement (36, 136, 136') angeordnet ist und dass das erste Sensorelement (35, 135, 135') im Bereich der fahrzeugseitigen Befestigung (A-B) des Bremshalters (1) an dem Bremshalter (1), insbesondere an der Belagführungsschiene (11b), angeordnet ist.

6. Bremshalter (1) nach einem der Ansprüche 1 bis 5, **dadurch gekennzeichnet, dass** die Sensorvorrichtung (38, 40, 41, 42, 43, 44), insbesondere der Sensorkörper (26, 26'), zumindest teilweise in einer Innenbohrung (27) der Belagführungsschiene (11b) angeordnet ist.

7. Bremshalter (1) nach einem der Ansprüche 1 bis 6, **dadurch gekennzeichnet, dass** das erste (35, 135, 135') und das zweite (36, 136, 136') Sensorelement nach einem magnetischen Messprinzip zusammenwirken.

8. Vorrichtung zur Ermittlung einer Maßgröße für eine wirkende Bremskraft ($F_B$) oder Reibkraft an einer, insbesondere hydraulisch betätigbaren, Scheibenbremse (311, 312) eines Kraftfahrzeugs, **dadurch gekennzeichnet, dass** die Vorrichtung einen an dem Kraftfahrzeug (10) befestigbaren (A-B) Bremshalter (1) nach einem der Ansprüche 1 bis 7 aufweist, an welchem beiderseits der Bremsscheibe (8) angeordnete Reibbeläge (7, 9) in axialer Richtung (z) der Bremsscheibe (8) begrenzt verschiebbar geführt sind, wobei die Reibbeläge (7, 9) bei einer Bremsung an je eine Seitenfläche der Bremsscheibe (8) anpressbar sind, und mit einem die Bremsscheibe (8) und die Reibbeläge (7, 9) übergreifenden Bremssattelgehäuse (2), welches insbesondere in axialer Richtung der Bremsscheibe (8) verschiebbar am Bremshalter (1) gelagert ist, wobei die Sensorvorrichtung (38, 39, 40, 41, 42, 43, 44) mit einer Regeleinheit (314) verbunden ist, welche eine Bremsregelung anhand eines Messsignals der Sensorvorrichtung durchführt.

9. Vorrichtung nach Anspruch 8, **dadurch gekennzeichnet, dass** der Bremshalter (1), insbesondere die Belagführungsschienen (11a, 11b) und eine Halterung (12, 13) der Reibbeläge (7, 9) an den Belagführungsschienen (11a, 11b), derart ausgeführt ist, dass der Bremshalter (1) bei einem Zuspannen oder Lösen der Scheibenbremse eine Kennlinie (100, 200) zwischen einer Bremsenstellgröße (E) und der Verschiebung ($\Delta x$, X) aufweist, welche bei zumindest einem charakteristischen Wert der Verschiebung ($X_{10}$, $X_{20}$) eine erkennbare Änderung ihres Verlaufs aufweist, welche insbesondere für eine Kalibrierung oder Reibbelagverschleißkorrektur der Maßgrößen-Ermittlung verwendbar ist.

10. Verfahren zur Ermittlung einer Maßgröße für eine wirkende Bremskraft ($F_B$) oder Reibkraft an einer, insbesondere hydraulisch betätigbaren, Scheibenbremse (311, 312) eines Kraftfahrzeugs, mit einem an dem Kraftfahrzeug (10) befestigbaren (A-B) Bremshalter (1) nach einem der Ansprüche 1 bis 7, mit zumindest zwei eine Bremsscheibe (8) übergreifenden Belagführungsschienen (11a, 11b), an welchen beiderseits der Bremsscheibe (8) angeordnete Reibbeläge (7, 9) in axialer Richtung (z) der Bremsscheibe (8) begrenzt verschiebbar geführt sind, und mit einem die Bremsscheibe (8) und die Reibbeläge (7, 9) übergreifenden Bremssattelgehäuse (2), **dadurch gekennzeichnet, dass** eine durch eine Bremskraftwirkung hervorgerufene Verschiebung ($\Delta x$) einer der Belagführungsschienen (11b) in Richtung (x) senkrecht zu der axialen Richtung (z) der Bremsscheibe (8) durch eine Sensorvorrichtung (38, 39, 40, 41, 42, 43, 44) mit einem ersten (35, 135, 135') und einem zweiten (36, 136, 136') Sensorelement, welche beide starr an dem Bremshalter (1) angebracht sind, gemessen wird.

11. Verfahren nach Anspruch 10, **dadurch gekennzeichnet, dass** bei einer Betätigung der Scheibenbremse im Stillstand des Kraftfahrzeugs (10) aus der ermittelten Verschiebung ($\Delta x$) ein Neigungswinkel oder eine Hangabtriebskraft des Kraftfahrzeugs ermittelt wird und/oder dass aus der ermittelten Verschiebung ($\Delta x$) bei einem Rutschen oder Gleiten des der Scheibenbremse zugehörigen Rades auf einen aktuell vorliegenden Reibwert geschlossen wird.

12. Verfahren nach Anspruch 10 oder 11, **dadurch gekennzeichnet, dass** eine Kennlinie (100, 200) des Bremshalters (1) vorgegeben ist und/oder eine aktuelle Kennlinie (100, 200) des Bremshalters während des Betriebs der Scheibenbremse ermittelt wird, wobei die Kennlinie (100, 200) einen Zusammenhang zwischen einer Bremsenstellgröße (E, p, I, $L_{Pedal}$) und der Verschiebung ($\Delta x$, X) bei einem Zuspannen oder Lösen der Scheibenbremse darstellt, und dass insbesondere eine Auswertung der Kennlinie (100, 200) zur Erkennung eines charakteristischen Wertes ($X_{10}$, $X_{20}$) der Kennlinie durchgeführt wird, bei welchem eine erkennbare Änderung des Verlaufs der Kennlinie, insbesondere eine sprunghafte Änderung der Steigung der Kennlinie, auftritt.

13. Verfahren nach Anspruch 12, **dadurch gekennzeichnet, dass** anhand einer ermittelten aktuellen Kennlinie (100, 200) eine Korrektur einer gemessenen Verschiebung ($\Delta x$, X) bezüglich eines Reibbelagsverschleiß durchgeführt wird, und insbesondere dass die korrigierte Verschiebung ($\Delta x$, X) zur Bremsregelung der Scheibenbremse herangezogen wird.

14. Verfahren nach Anspruch 12 oder 13, **dadurch gekennzeichnet, dass** eine aktuelle Kennlinie (100, 200) des Bremshalters (1) unter zu Hilfenahme eines charakteristischen Werts ($X_{10}$, $X_{20}$) der Kennlinie, bei welchem eine erkennbare Änderung des Verlaufs der Kennlinie, insbesondere eine sprunghafte Änderung der Steigung der Kennlinie, auftritt, bestimmt oder ausgewertet wird.

15. Verfahren nach einem der Ansprüche 12 bis 14, **dadurch gekennzeichnet, dass** anhand der vorgegebenen oder ermittelten Kennlinie des Bremshalters (1) aus einer gemessenen Verschiebung ($\Delta x$) eine Bremsenstellgröße (E, p, I, $L_{Pedal}$) bestimmt wird, und insbesondere dass eine elektronische Bremsregelung der Scheibenbremse (311, 312) anhand der ermittelten Bremsenstellgröße (E, p, I, $L_{Pedal}$) durchgeführt wird.

16. Verfahren nach einem der Ansprüche 10 bis 14, **dadurch gekennzeichnet, dass** eine elektronische Bremsregelung der Scheibenbremse (311, 312) direkt anhand der ermittelten Verschiebung ($\Delta x$) ohne Berechnung oder Bestimmung einer Bremskraft ($F_B$) oder einer Bremsenstellgröße durchgeführt wird.

**Claims**

1. Brake mount (1) for determining a measured magnitude for an active brake force ($F_B$) or frictional force on a disc brake (311, 312) of a motor vehicle, which brake mount (1) can be fastened (A-B) to the motor vehicle (10), the brake mount (1) comprising at least two lining guide rails (11a, 11b) which reach over a brake disc (8) and on which friction linings (7, 9) which are arranged on both sides of the brake disc (8) can be guided such that they can be displaced to a limited extent in the axial direction (z) of the brake disc (8), and which brake mount (1) comprises a sensor apparatus (38, 39, 40, 41, 42, 43, 44), the sensor apparatus having a first (35, 135, 135') and a second (36, 136, 136') sensor element, the relative movement of which is measured, **characterized in that** a displacement ($\Delta x$) of one of the lining guide rails (11b) in a direction (x) perpendicular with respect to the axial direction (z) of the brake disc (8) is measured by means of the sensor apparatus, which displacement ($\Delta x$) is brought about by way of a brake force action, the first sensor element (35, 135, 135') and the second sensor element (36, 136, 136') being attached in each case rigidly to the brake mount (1).

2. Brake mount (1) according to Claim 1, **characterized in that** the sensor apparatus (38, 39, 40, 41, 42, 43, 44) comprises a rigid, in particular rod-shaped, sensor body (24, 26, 26') which is connected rigidly on one side to a part of the brake mount (1), in particular to the lining guide rail (11b), and to which sensor body (24, 26, 26') the first (35, 135, 135') or the second sensor element (36, 136, 136') is attached, in particular, in a region of the free end of the sensor body (24, 26, 26').

**3.** Brake mount (1) according to Claim 2, **characterized in that** the sensor body (24, 26, 26') extends over the brake disc (8) along the lining guide rail (11b).

**4.** Brake mount (1) according to Claim 2 or 3, **characterized in that** the sensor body (24, 26) is fastened by way of one of its ends to the brake mount (1), in particular to the lining guide rail (11b), in the region of the vehicle-side fastening (A-B) of the brake mount (1), **in that** the first sensor element (35, 135, 135') is arranged at the other end of the sensor body (24, 26), and **in that** the second sensor element (36, 136, 136') is arranged in a region of that end of the lining guide rail (11b) which faces away from the vehicle.

**5.** Brake mount (1) according to Claim 2 or 3, **characterized in that** the sensor body (26') is fastened by way of one of its ends to that end of the lining guide rail (11b) which faces away from the vehicle, **in that** the second sensor element (36, 136, 136') is arranged at the other end of the sensor body (26'), and **in that** the first sensor element (35, 135, 135') is arranged on the brake mount (1), in particular on the lining guide rail (11b), in the region of the vehicle-side fastening (A-B) of the brake mount (1).

**6.** Brake mount (1) according to one of Claims 1 to 5, **characterized in that** the sensor apparatus (38, 40, 41, 42, 43, 44), in particular the sensor body (26, 26'), is arranged at least partially in an inner bore (27) of the lining guide rail (11b).

**7.** Brake mount (1) according to one of Claims 1 to 6, **characterized in that** the first (35, 135, 135') and the second (36, 136, 136') sensor element interact in accordance with a magnetic measuring principle.

**8.** Apparatus for determining a measured magnitude for an active brake force ($F_B$) or frictional force on a disc brake (311, 312) of a motor vehicle, which disc brake (311, 312) can be actuated, in particular, hydraulically, **characterized in that** the apparatus has a brake mount (1) according to one of Claims 1 to 7 which can be fastened (A-B) to the motor vehicle (10), and on which friction linings (7, 9) which are arranged on both sides of the brake disc (8) are guided such that they can be displaced to a limited extent in the axial direction (z) of the brake disc (8), it being possible, in the case of a braking operation, for the friction linings (7, 9) to be pressed onto in each case one side face of the brake disc (8), and with a brake calliper housing (2) which reaches over the brake disc (8) and the friction linings (7, 9) and which is mounted on the brake mount (1) such that it can be displaced, in particular, in the axial direction of the brake disc (8), the sensor apparatus (38, 39, 40, 41, 42, 43, 44) being connected to a regulating unit (314) which carries out a brake regulation operation on the basis of a measurement signal of the sensor apparatus.

**9.** Apparatus according to Claim 8, **characterized in that** the brake mount (1), in particular the lining guide rails (11a, 11b) and a mount (12, 13) of the friction linings (7, 9) on the lining guide rails (11a, 11b), is configured in such a way that, in the case of an application or release of the disc brake, the brake mount (1) has a characteristic line (100, 200) between a brake actuating variable (E) and the displacement ($\Delta x$, X), which characteristic line (100, 200), in the case of at least one characteristic value of the displacement ($X_{10}$, $X_{20}$), has a discernible change in its course, which change can be used, in particular, for a calibration or friction lining wear correction of the measured variable determination.

**10.** Method for determining a measured variable for an active brake force ($F_B$) or frictional force on a disc brake (311, 312) of a motor vehicle, which disc brake (311, 312) can be actuated, in particular, hydraulically, with a brake mount (1) according to one of Claims 1 to 7 which can be fastened (A-B) to the motor vehicle (10), with at least two lining guide rails (11a, 11b) which reach over a brake disc (8) and on which friction linings (7, 9) which are arranged on both sides of the brake disc (8) are guided such that they can be displaced to a limited extent in the axial direction (z) of the brake disc (8), and with a brake calliper housing (2) which reaches over the brake disc (8) and the friction linings (7, 9), **characterized in that** a displacement ($\Delta x$) of one of the lining guide rails (11b) in the direction (x) perpendicularly with respect to the axial direction (z) of the brake disc (8), which displacement ($\Delta x$) is brought about by way of a brake force action, is measured by way of a sensor apparatus (38, 39, 40, 41, 42, 43, 44) with a first (35, 135, 135') and a second (36, 136, 136') sensor element which are both attached rigidly to the brake mount (1).

**11.** Method according to Claim 10, **characterized in that**, in the case of an actuation of the disc brake at a standstill of the motor vehicle (10), an angle of inclination or a downward force of the motor vehicle is determined from the determined displacement ($\Delta x$), and/or in that a currently present coefficient of friction is extrapolated from the determined displacement ($\Delta x$) in the case of slipping or sliding of the wheel which belongs to the disc brake.

**12.** Method according to Claim 10 or 11, **characterized in that** a characteristic line (100, 200) of the brake mount (1) is predefined and/or a current characteristic line (100, 200) of the brake mount is determined during the operation of the disc brake, the characteristic line (100, 200) representing a correlation between a brake actuating variable (E, p, I, $L_{Pedal}$) and the displacement ($\Delta x$, X) in the case of an application or release of the disc brake, and **in that**, in particular, an evaluation of the characteristic line (100, 200) is carried out in order to detect a characteristic value ($X_{10}$, $X_{20}$) of the characteristic line, in the case of which characteristic value ($X_{10}$, $X_{20}$) a discernible change in the course of the characteristic line occurs, in particular a sudden change in the gradient of the characteristic line.

**13.** Method according to Claim 12, **characterized in that** a correction of a measured displacement ($\Delta x$, X) with regard to a friction lining wear state is carried out on the basis of the determined current characteristic line (100, 200), and, in particular, **in that** the corrected displacement ($\Delta x$, X) is used for brake regulation of the disc brake.

**14.** Method according to Claim 12 or 13, **characterized in that** a current characteristic line (100, 200) of the brake mount (1) is determined or evaluated with the aid of a characteristic value ($X_{10}$, $X_{20}$) of the characteristic line, in the case of which characteristic value ($X_{10}$, $X_{20}$) a discernible change in the course of the characteristic line occurs, in particular a sudden change in the gradient of the characteristic line.

**15.** Method according to one of Claims 12 to 14, **characterized in that** a brake actuating variable (E, p, I, $L_{Pedal}$) is determined from a measured displacement ($\Delta x$) on the basis of the predefined or determined characteristic line of the brake mount (1), and, in particular, **in that** an electronic brake regulation operation of the disc brake (311, 312) is carried out on the basis of the determined brake actuating variable (E, p, I, $L_{Pedal}$).

**16.** Method according to one of Claims 10 to 14, **characterized in that** an electronic brake regulation operation of the disc brake (311, 312) is carried out directly on the basis of the determined displacement ($\Delta x$) without calculation or determination of a brake force ($F_B$) or a brake actuating variable.

**Revendications**

**1.** Support de frein (1) servant à déterminer une grandeur de mesure pour une force de freinage ($F_B$) ou une force de friction agissant sur un frein à disque (311, 312) d'un véhicule automobile, qui peut être fixé (A-B) au véhicule automobile (10), dans lequel le support de frein (1) comprend au moins deux rails de guidage de garniture (11a, 11b) chevauchant un disque de frein (8), sur lesquels des garnitures de friction (7, 9) disposées des deux côtés du disque de frein (8) peuvent être guidées en étant déplaçables de manière limitée dans la direction axiale (z) du disque de frein (8), et un dispositif de détection (38, 39, 40, 41, 42, 43, 44), le dispositif de détection présentant un premier (35, 135, 135') et un deuxième (36, 136, 136') élément de capteur dont le déplacement relatif est mesuré, **caractérisé en ce que** le dispositif de détection permet de mesurer un décalage ($\Delta x$), provoqué par un effet de force de freinage, d'un des rails de guidage de garniture (11b) dans la direction (x) perpendiculairement à la direction axiale (z) du disque de frein (8), dans lequel le premier élément de capteur (35, 135, 135') et le deuxième élément de capteur (36, 136, 136') sont attachés respectivement de manière rigide au support de frein (1).

**2.** Support de frein (1) selon la revendication 1, **caractérisé en ce que** le dispositif de détection (38, 39, 40, 41, 42, 43, 44) comprend un corps de capteur (24, 26, 26') rigide, en particulier en forme de barre, qui est relié de manière rigide d'un côté à une partie du support de frein (1), en particulier au rail de guidage de garniture (11b), et auquel est fixé le premier (35, 135, 135') ou le deuxième élément de capteur (36, 136, 136'), en particulier dans une zone de l'extrémité libre du corps de capteur (24, 26, 26').

**3.** Support de frein (1) selon la revendication 2, **caractérisé en ce que** le corps de capteur (24, 26, 26') s'étend le long du rail de guidage de garniture (11b) par-dessus le disque de frein (8).

**4.** Support de frein (1) selon la revendication 2 ou 3, **caractérisé en ce que** le corps de capteur (24, 26) est fixé au support de frein (1), en particulier au rail de guidage de garniture (11b), par l'une de ses extrémités au niveau de la fixation (A-B) côté véhicule du support de frein (1), **en ce que** le premier élément de capteur (35, 135, 135') est disposé à l'autre extrémité du corps de capteur (24, 26), et **en ce que** le deuxième élément de capteur (36, 136, 136') est disposé dans une zone de l'extrémité, détournée du véhicule, du rail de guidage de garniture (11b).

**5.** Support de frein (1) selon la revendication 2 ou 3, **caractérisé en ce que** le corps de capteur (26') est fixé par l'une de ses extrémités à l'extrémité, détournée du véhicule, du rail de guidage de garniture (llb), **en ce que** le deuxième élément de capteur (36, 136, 136') est disposé à l'autre extrémité du corps de capteur (26'), et **en ce que** le premier élément de capteur (35, 135, 135') est disposé sur le support de frein (1), en particulier sur le rail de guidage de garniture (llb), au niveau de la fixation (A-B) côté véhicule du support de frein (1).

6. Support de frein (1) selon l'une quelconque des revendications 1 à 5, **caractérisé en ce que** le dispositif de détection (38, 40, 41, 42, 43, 44), en particulier le corps de capteur (26, 26'), est disposé au moins en partie dans un alésage intérieur (27) du rail de guidage de garniture (11b).

7. Support de frein (1) selon l'une quelconque des revendications 1 à 6, **caractérisé en ce que** le premier (35, 135, 135') et le deuxième (36, 136, 136') élément de capteur coopèrent selon un principe de mesure magnétique.

8. Dispositif de détermination d'une grandeur de mesure pour une force de freinage ($F_B$) ou une force de friction agissant sur un frein à disque (311, 312), en particulier à commande hydraulique, d'un véhicule automobile, **caractérisé en ce que** le dispositif présente un support de frein (1) selon l'une quelconque des revendications 1 à 7 pouvant être fixé (A-B) au véhicule automobile (10) et sur lequel des garnitures de friction (7, 9), disposées des deux côtés du disque de frein (8), peuvent être guidées en étant déplaçables de manière limitée dans la direction axiale (z) du disque de frein (8), les garnitures de friction (7, 9) pouvant être plaquées contre une surface latérale du disque de frein (8) respectivement en cas de freinage, et comprenant un carter d'étrier de frein (2) chevauchant le disque de frein (8) et les garnitures de friction (7, 9) et qui est monté sur le support de frein (1) de manière déplaçable en particulier dans la direction axiale du disque de frein (8), le dispositif de détection (38, 39, 40, 41, 42, 43, 44) étant relié à une unité de régulation (314) qui effectue une régulation de freinage à l'aide d'un signal de mesure du dispositif de détection.

9. Dispositif selon la revendication 8, **caractérisé en ce que** le support de frein (1), en particulier les rails de guidage de garniture (11a, 11b) et une bride (12, 13) des garnitures de friction (7, 9), est guidé sur les rails de guidage de garniture (11a, 11b) de telle sorte qu'en cas de serrage ou de desserrage du frein à disque, le support de frein (1) présente une courbe caractéristique (100, 200) entre une grandeur de réglage de frein (E) et le décalage ($\Delta x$, X) qui présente une variation perceptible de son allure pour au moins une valeur caractéristique du décalage ($X_{10}$, $X_{20}$) qui peut être utilisée en particulier pour un calibrage ou une correction d'usure de garniture de friction de la détermination de grandeurs de mesure.

10. Procédé servant à déterminer une grandeur de mesure pour une force de freinage ($F_B$) ou une force de friction agissant sur un frein à disque (311, 312), en particulier à commande hydraulique, d'un véhicule automobile, comprenant un support de frein (1) selon l'une quelconque des revendications 1 à 7 pouvant être fixé (A-B) au véhicule automobile (10), comprenant au moins deux rails de guidage de garniture (11a, 11b) chevauchant un disque de frein (8), sur lesquels des garnitures de friction (7, 9) disposées des deux côtés du disque de frein (8) peuvent être guidées en étant déplaçables de manière limitée dans la direction axiale (z) du disque de frein (8), et comprenant un carter d'étrier de frein (2) chevauchant le disque de frein (8) et les garnitures de friction (7, 9), **caractérisé en ce qu'**un décalage ($\Delta x$), provoqué par un effet de force de freinage, d'un des rails de guidage de garniture (11b) dans la direction (x) perpendiculairement à la direction axiale (z) du disque de frein (8) est mesuré par un dispositif de détection (38, 39, 40, 41, 42, 43, 44) à l'aide d'un premier (35, 135, 135') et d'un deuxième (36, 136, 136') élément de capteur qui sont tous les deux attachés de manière rigide au support de frein (1).

11. Procédé selon la revendication 10, **caractérisé en ce que**, si le frein à disque est actionné à l'arrêt du véhicule automobile (10), un angle d'inclinaison ou une force de descente du véhicule automobile est déterminé(e) à partir du décalage ($\Delta x$) déterminé, et/ou en ce qu'en cas de patinage ou de glissement de la roue associée au frein à disque, le décalage ($\Delta x$) déterminé permet de conclure à un coefficient de frottement actuellement donné.

12. Procédé selon la revendication 10 ou 11, **caractérisé en ce qu'**une courbe caractéristique (100, 200) du support de frein (1) est prédéfinie et/ou une courbe caractéristique actuelle (100, 200) du support de frein est déterminée pendant le fonctionnement du frein à disque, la courbe caractéristique (100, 200) représentant une relation entre une grandeur de réglage de frein (E, p, I, $L_{pedal}$) et le décalage ($\Delta x$, X) lors d'un serrage ou desserrage du frein à disque, et **en ce qu'**en particulier une évaluation de la courbe caractéristique (100, 200) est effectuée pour reconnaître une valeur caractéristique ($X_{10}$, $X_{20}$) de la courbe caractéristique pour laquelle se produit une variation perceptible de l'allure de la courbe caractéristique, en particulier une variation brusque de la pente de la courbe caractéristique.

13. Procédé selon la revendication 12, **caractérisé en ce qu'**à l'aide d'une courbe caractéristique (100, 200) actuelle déterminée, une correction d'un décalage mesuré ($\Delta x$, X) est effectuée concernant une usure de garniture de friction, et en particulier **en ce que** le décalage corrigé ($\Delta x$, X) est utilisé pour la régulation de freinage du frein à disque.

14. Procédé selon la revendication 12 ou 13, **caractérisé en ce qu'**une courbe caractéristique actuelle (100, 200) du support de frein (1) est déterminée ou évaluée à l'aide d'une valeur caractéristique ($X_{10}$, $X_{20}$) de la courbe caractéristique pour laquelle se produit une variation perceptible de l'allure de la courbe caractéristique, en particulier une variation brusque de la pente de la courbe caractéristique.

15. Procédé selon l'une quelconque des revendications 12 à 14, **caractérisé en ce qu'**à l'aide de la courbe caractéristique prédéfinie ou déterminée du support de frein (1), une grandeur de réglage de freinage (E, p, I, $L_{pedal}$) est déterminée à partir d'un décalage ($\Delta x$) mesuré, et en particulier **en ce qu'**une régulation de freinage électronique du frein à disque (311, 312) est effectuée à l'aide de la grandeur de réglage de freinage déterminée (E, p, I, $L_{pedal}$).

16. Procédé selon l'une quelconque des revendications 10 à 14, **caractérisé en ce qu'**une régulation de freinage électronique du frein à disque (311, 312) est effectuée directement à l'aide du décalage déterminé ($\Delta x$) sans calculer ou déterminer une force de freinage ($F_B$) ou une grandeur de réglage de freinage.

Fig. 1

Fig. 2

31

2

10

A

108

11a

1

11b

Δx

12a

12b

13

8

z

x

30

30

30

# Fig. 3

B

EP 2 635 473 B1

Fig. 4

a)

36

35

1

26

49

F=0

x

z

40

11b

27

A                                                    B

**Fig. 5**    37

38

10

b)

Δx

α2

α1

36

35

FMAX

26

11b

27

49

A                                                    B

10

a)

1

26'

49

36

F=0

x

z

11b

27

42

A                                                    B

35    49a

**Fig. 6**    10

b)

FMAX

26'

36

11b

35

A                                                    B

37

Δα    10

19

18

135

16

38

15

17

136

14

λ

**Fig. 7**

120

118

135'

121

117

115

41

122

136'

114

116

**Fig. 8**

**Fig. 9**

**Fig. 10**

a) b) c)

**Fig. 11**

a)

59    59

11a

11b    59    59

1

10

b)

10

x

11b    F_B    1

Δα

A-B

c)    27    11b

40

10

Fig. 12

**Fig. 13**

Fig. 14

**Fig. 15**

**Fig. 16**

EP 2 635 473 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006029978 B3
- DE 102005013142 A1
- EP 0388040 A2
- DE 102008042298 A1
- US 20040159512 A1